# EUROPÄISCHE PATENTANMELDUNG

(11) **EP 4 137 018 A1**
(43) Veröffentlichungstag der Anmeldung: **22.02.2023**
(21) Anmeldenummer: 21192448.5
(22) Anmeldetag: 20.08.2021
(51) Int. Cl.: A47J 43/07

(54) **KÜCHENGERÄT MIT EINER KÜCHENGERÄTEBASIS UND EINEM ZUBEREITUNGSMODUL**

(71) Anmelder: Vorwerk & Co. Interholding GmbH, 42270 Wuppertal (DE)
(72) Erfinder: BAYARD, Christian, 58456 Witten (DE)
(74) Vertreter: Dr. Solf & Zapf Patent- und Rechtsanwalts PartG mbB

(57) **Zusammenfassung**

Die vorliegende Erfindung betrifft ein Küchengerät (1), mit mindestens einer Küchengerätebasis (2) und mindestens einem Zubereitungsmodul (3), wobei die Küchengerätebasis (2) mindestens eine elektrische Schnittstelle (7) und mindestens einen Aufnahmebereich (4) aufweist, wobei das Zubereitungsmodul (3) mindestens eine elektrische Gegenschnittstelle (8) zur elektrischen Kontaktierung mit der elektrischen Schnittstelle (7) aufweist, wobei die elektrische Schnittstelle (7) mindestens zwei Leistungskontakte (7a) und mindestens einen Hilfskontakt (7b) aufweist, und wobei die elektrischen Gegenschnittstelle (8) mindestens zwei Leistungsgegenkontakte (8a) und mindestens einen Hilfsgegenkontakt (8b) aufweist.

Ein Küchengerät (1) sowie eine Küchengerätebasis (2) und ein Zubereitungsmodul (3), bei denen die Einbringkräfte für die elektrische Kontaktierung für den Benutzer reduziert sind, werden dadurch realisiert, dass die Leistungskontakte (7a) und die Leistungsgegenkontakte (8a) sowie der Hilfskontakt (7b) und der Hilfsgegenkontakt (8b) derart ausgebildet und eingerichtet sind, dass die Leistungskontakte (7a) mit den Leistungsgegenkontakten (8a) zu einem unterschiedlichen Zeitpunkt elektrisch kontaktiert werden als der Hilfskontakt (7b) mit dem Hilfsgegenkontakt (8b).

## Beschreibung

Die Erfindung betrifft ein Küchengerät, mit mindestens einer Küchengerätebasis und mindestens einem Zubereitungsmodul. Die Küchengerätebasis weist mindestens eine elektrische Schnittstelle und mindestens einen Aufnahmebereich für das Zubereitungsmodul auf. Die elektrische Schnittstelle weist mindestens zwei elektrische Leistungskontakte und mindestens einen elektrischen Hilfskontakt auf. Das Zubereitungsmodul weist mindestens eine, zur elektrischen Schnittstelle korrespondierende, elektrische Gegenschnittstelle auf. Die elektrische Gegenschnittstelle weist mindestens zwei elektrische Leistungsgegenkontakte und mindestens einen elektrischen Hilfsgegenkontakt auf.

Küchengeräte mit Küchengerätebasis und Zubereitungsmodul sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen und/oder Warmhalten, insbesondere von Speisen. Das Küchengerät weist üblicherweise eine Küchengerätebasis auf, die einen Aufnahmebereich für mindestens ein Zubereitungsmodul bereitstellt. Der Aufnahmebereich weist häufig mindestens eine elektrische Schnittstelle auf, um das in den Aufnahmebereich eingebrachtes Zubereitungsmodul mit mindestens einer Arbeitsspannung zu versorgen, beispielsweise für eine Heizeinrichtung, oder um beispielsweise Sensoren zu kontaktieren. Über die Schnittstelle könnten auch andere Steuerinformationen übermittelt werden und auch verschiedene Arbeitsspannungen übertragen werden.

Alternativ oder zusätzlich ist im Aufnahmebereich mindestens eine Antriebsschnittstelle vorgesehen, die beispielsweise der Übertragung eines Drehmoments von einer Arbeitseinheit, z. B. eines Motors, der Küchengerätebasis beispielsweise auf ein an dem Zubereitungsmodul angeordnetes Werkzeug dient. Zudem weist die Küchengerätebasis üblicherweise ein Verriegelungsmittel auf, um ein Entfernen des Zubereitungsmoduls nach dem Verriegeln mit der Küchengerätebasis zu verhindern. Das Verriegeln gewährleistet einen sicheren Arbeitsprozess und verhindert insbesondere ein versehentliches Entfernen des Zubereitungsmoduls während eines Arbeitsprozesses.

Aus dem Stand der Technik ist es bekannt, dass die Leistungskontakte und die Hilfskontakte beim Anordnen des Zubereitungsmoduls im Aufnahmebereich automatisch während des Anordnens kontaktiert werden, indem sie so angeordnet sind, dass sie nach dem Anordnen aneinander anliegen.

Obwohl aus dem Stand der Technik bekannte Küchengeräte bereits einen hohen Benutzerkomfort gewährleisten, muss beim Anordnen des Zubereitungsmoduls, insbesondere zum Überwinden von Dichtungen, eine große Kraft durch den Benutzer für die elektrische Kontaktierung aufgebracht werden.

Der Erfindung liegt daher die Aufgabe zugrunde, ein Küchengerät sowie eine Küchengerätebasis und ein Zubereitungsmodul, bei denen die Einbringkräfte für die elektrische Kontaktierung für den Benutzer reduziert sind.

Die vorgenannte Aufgabe wird bei einem gattungsgemäßen Küchengerät gelöst mit dem Merkmalsinhalt des Kennzeichnungsteils des Anspruchs 1, nämlich dadurch, dass die Leistungskontakte und die Leistungsgegenkontakte sowie der Hilfskontakt und der Hilfsgegenkontakt derart ausgebildet und eingerichtet sind, dass die Leistungskontakte mit den Gegenleistungskontakten zu einem unterschiedlichen Zeitpunkt elektrisch kontaktiert werden als der Hilfskontakt mit dem Hilfsgegenkontakt.

"Elektrisch kontaktiert" bedeutet in diesem Zusammenhang nicht die tatsächliche Beaufschlagung der Kontakte mit einem elektrischen Signal oder einer elektrischen Spannung, sondern die physikalische Kontaktierung, die prinzipiell ein Leiten von Strom oder Signalen ermöglicht. "Zu einem unterschiedlichen Zeitpunkt" bedeutet, dass beispielsweise der Hilfskontakt mit dem Hilfsgegenkontakt zeitlich vor dem Leistungskontakt mit dem Leistungsgegenkontakt kontaktiert wird oder andersherum. Die Kontaktierung kann mit sehr geringem zeitlichen Abstand erfolgen, jedenfalls aber nicht gleichzeitig.

Vorzugsweise sind mindestens zwei, insbesondere genau zwei, mindestens drei, insbesondere genau drei, mindestens vier, insbesondere genau vier, Hilfskontakte vorgesehen. Vorzugsweise werden alle Hilfskontakte zeitlich vor den Leistungskontakten kontaktiert. Die Hilfskontakte werden vorzugsweise gleichzeitig kontaktiert. Beispielsweise ist vorgesehen, dass die Hilfskontakte in redundanten Gruppen vorhanden sind, beispielsweise mindestens zwei Gruppen mit jeweils vier Hilfskontakten, wobei von dem Zubereitungsmodul in Abhängigkeit von der Ausrichtung eines Zubereitungsmoduls nur jeweils vier der Hilfskontakte kontaktiert werden. Dadurch kann ein Zubereitungsmodul in mindestens zwei unterschiedlichen Ausrichtungen angeordnet werden, wobei gleichzeitig die Hilfskontakte kontaktierbar sind. Jeweils zwei Hilfskontakte aus den beiden Gruppen sind vorzugsweise paarweise parallelgeschaltet. Beispielsweise sind die Hilfskontakte derart symmetrisch an der Küchengerätebasis angeordnet, dass ein Zubereitungsmodul in mindestens zwei unterschiedlichen Ausrichtungen anordenbar ist.

Sofern nur ein einziger Hilfskontakt vorgesehen ist, ist dieser insbesondere derart ausgebildet und angeordnet, dass er in zwei unterschiedlichen Anordnungen eines Zubereitungsmoduls kontaktierbar ist. Beispielsweise erstreckt sich der Hilfskontakt dazu zumindest über einen Teil einer Umgangsfläche, insbesondere eines Kontaktträgermoduls, im Aufnahmebereich.

Beispielsweise weist die elektrische Schnittstelle mindestens zwei, insbesondere genau zwei, mindestens drei, insbesondere genau drei, mindestens vier, insbesondere genau vier, mindestens fünf, insbesondere genau fünf, mindestens sechs, insbesondere genau sechs, Leistungskontakte auf. Die Anzahl der Leistungskontakte und die entsprechende Anzahl an Leistungsgegenkontakten hängt von der Art und Anzahl der elektrischen Verbraucher des Zubereitungsmoduls ab. Weist das Zubereitungsmodul beispielsweise eine Heizeinrichtung auf, sind zwei Leistungskontakte vorhanden. Weist das Zubereitungsmodul beispielsweise zwei Heizeinrichtungen auf, so sind vorzugsweise drei oder vier Leistungskontakte und drei oder vier Leistungsgegenkontakte vorhanden.

Die Lehre der Erfindung ist beispielsweise dadurch realisiert, dass die Leistungskontakte bzw. die Leistungsgegenkontakte und die Hilfskontakte bzw. die Hilfsgegenkontakte derart an unterschiedlichen Positionen an der Küchengerätebasis bzw. dem Zubereitungsmodul angeordnet sind, dass beim Anordnen des Zubereitungsmoduls im Aufnahmebereich der Küchengerätebasis die vorgenannten Kontakte alle durch das Anordnen kontaktiert werden, allerdings die Leistungskontakte und die Leistungsgegenkontakte zu einem unterschiedlichen Zeitpunkt kontaktiert werden als der Hilfskontakt mit dem Hilfsgegenkontakt. Insbesondere werden zuerst die Hilfskontakte mit den Hilfsgegenkontakten und anschließend die Leistungskontakte mit den Leistungsgegenkontakten kontaktiert.

Beispielsweise ist vorgesehen, dass die beiden Leistungsgegenkontakte als Kontaktstifte am Zubereitungsmodul und die Leistungskontakte als korrespondierende Kontaktbuchsen an der Küchengerätebasis ausgebildet sind. Der Hilfskontakte bzw. die Hilfskontakte oder der Hilfsgegenkontakt bzw. die Hilfsgegenkontakte weisen eine von der Stiftform bzw. Buchsenform abweichende Form auf. Beispielsweise ist der Hilfskontakt bzw. sind die Hilfskontakte als vorzugsweise federnde Kontaktklammern und/oder der Hilfsgegenkontakt bzw. die Hilfsgegenkontakte als Kontaktflächen ausgebildet. Die federnden Kontaktklammern sind erfindungsgemäß insbesondere derart angeordnet, dass sie zeitlich vor den Kontaktstiften mit den Kontaktbuchsen kontaktiert werden. Beispielsweise ist die Länge der Kontaktstifte derart gewählt, dass ein Kontaktieren erst unmittelbar vor Abschluss des Anordenvorgangs erfolgt.

Ferner ist vorgesehen, dass die Leistungskontakte gedichtet ausgebildet sind, und dass der Hilfskontakt bzw. die Hilfskontakte ungedichtet ausgebildet sind.

Vorzugsweise weist mindestens ein als Kontaktbuchse ausgebildeter Leistungskontakt eine Dichtmittel oder Dichtkappe auf, die ein Eindringen von Flüssigkeit in die Kontaktbuchse verhindert. Vorzugsweise weisen alle Leistungskontakte eine Dichtkappe oder ein Dichtmittel auf. Die Hilfskontakte liegen offen bzw. sind ungedichtet.

Vorteilhaft ist vorgesehen, dass die Leistungskontakte und die Hilfskontakte getrennt voneinander an der Küchengerätebasis angeordnet sind bzw. dass die Leistungsgegenkontakte und die Hilfsgegenkontakte getrennt voneinander an dem Zubereitungsmodul angeordnet sind.

Insbesondere ist vorgesehen, dass die Leistungskontakte als erster Schnittstellentyp und der Hilfskontakt bzw. die Hilfskontakte als zweiter Schnittstellentyp ausgebildet sind. Erster und zweiter Schnittstellentyp sind unterschiedlich ausgebildet. Die Leistungsgegenkontakte und die Hilfsgegenkontakte sind jeweils als zum ersten bzw. zum zweiten Schnittstellentyp korrespondierende Schnittstellentypen ausgebildet.

Die Hilfskontakte sind beispielsweise für Mess-, Steuer- und/oder Regelzwecke ausgebildet. Vorzugsweise ist mindestens ein Hilfskontakt als Schutzleiter ausgebildet und/oder sind mindestens zwei Hilfskontakte als Signalkontakte, insbesondere für mindestens einen Temperatursensor, vorzugsweise ein Thermoelement, des Zubereitungsmoduls ausgebildet und/oder ist mindestens ein Hilfskontakt als Deckelkontakt ausgebildet und/oder ist mindestens ein Hilfskontakt zur Übertragung von Daten und/oder Signalen zum Zubereitungsmodul ausgebildet und/oder ist mindestens ein Hilfskontakt zur Spannungsversorgung von Bauelementen in einem Zubereitungsmodul mit für eine Berührung unkritischen Spannungen ausgebildet.

Besonders bevorzugt ist vorgesehen, dass eine Kontaktierung der Leistungskontakte mit den Leistungsgegenkontakten erst erfolgt, wenn das Zubereitungsmodul vollständig im Aufnahmebereich angeordnet ist, also der Anordenvorgang abgeschlossen ist.

Der Aufnahmebereich der Küchengerätebasis ist zum Verbinden mit dem Zubereitungsmodul eingerichtet und ausgebildet. Vorzugsweise wird das Zubereitungsmodul zumindest teilweise im Aufnahmebereich aufgenommen. Der Aufnahmebereich für das Zubereitungsgefäß ist vorzugsweise zumindest teilweise bezüglich seiner Form im Wesentlichen korrespondierend zu einem Fußabschnitt des Zubereitungsmoduls ausgebildet, insbesondere um das Zubereitungsmodul zumindest teilweise formschlüssig aufzunehmen. Der Aufnahmebereich ist insbesondere derart ausgebildet, dass eine Rotation des Zubereitungsmoduls relativ zur Küchengerätebasis bereits durch die mindestens zwei definierten Ausrichtungen verhindert wird. Bei den beiden Ausrichtungen relativ zur Küchengerätebasis wird ein Formschluss, der einen Rotation verhindert, bereits beim Anordnen des Zubereitungsmoduls im Aufnahmebereich verhindert.

Die Küchengerätebasis weist vorzugsweise mindestens ein Gehäuse auf, an dem der Aufnahmebereich zur Aufnahme mindestens eines Zubereitungsmoduls ausgebildet ist. Vorzugsweise ist der Aufnahmebereich im Wesentlichen in einer Ebene E angeordnet, die parallel zu einer Standfläche der Küchengerätebasis bei üblicher Verwendung ausgebildet ist. Vorzugsweise verfügt die Küchengerätebasis insbesondere über mindestens eine Arbeitseinheit mit mindestens einem Elektromotor, dessen Drehmoment über eine Antriebsschnittstelle im Aufnahmebereich übertragbar ist. Alternativ oder zusätzlich verfügt die Küchengerätebasis über mindestens eine Wiegeeinrichtung zum Wiegen von in dem Zubereitungsmodul angeordneten Speisen sowie ferner über mindestens einen Netzanschluss zur Spannungsversorgung.

Eine Steuereinrichtung des Küchengerätes, insbesondere der Küchengerätebasis, steuert beispielsweise zumindest teilautomatisch oder automatisch einen Heizvorgang des Zubereitungsmoduls oder einen Zubereitungsprozess einer Speise. Mit der Steuereinrichtung werden vorzugsweise auch Programmabläufe zur Zubereitung von Speisen, z. B. Rezepte, insbesondere teilautomatisch oder automatisch, gesteuert. Vorzugsweise ist die Küchengerätebasis oder das Küchengerät, für das automatische, teilautomatische oder manuelle Zubereiten, z. B. Zerkleinern, Mahlen, Pressen, Rühren, Garen und/oder Warmhalten, insbesondere von Speisen, ausgebildet.

Das Zubereitungsmodul verfügt vorzugsweise über mindestens eine elektrische Heizeinrichtung, insbesondere mindestens zwei elektrische Heizeinrichtungen. Jede elektrische Heizeinrichtung wird über die elektrische Gegenschnittstelle kontaktiert. Beispielsweise verfügt das Zubereitungsmodul über mindestens ein Werkzeug, beispielsweise ein Reibwerkzeug, ein Rührwerkzeug und/oder ein Zerkleinerungswerkzeug. Ferner ist vorgesehen, dass Werkzeug beispielsweise als Obst- und/oder Gemüsepresse oder -reibe ausgebildet ist. Es ist vorgesehen, dass die Funktionen der vorgenannten Werkzeuge in einem Werkzeug kombiniert sind. Das Zubereitungsmodul weist insbesondere mindestens eine Antriebsschnittstelle auf, um Drehmomente von einer Arbeitseinheit, z. B. einem Motor, der Küchengerätebasis auf ein in dem Zubereitungsmodul angeordnetes Werkzeug zu übertragen.

Das Zubereitungsmodul weist vorzugsweise einen Zubereitungsinnenraum zur Aufnahme von Speisen auf. Das Zubereitungsmodul ist beispielsweise als Zubereitungstopf ausgebildet, insbesondere mit mindestens einer integrierten Heizeinrichtung und mindestens einer integrierten Rühreinrichtung.

Es ist auch vorgesehen, dass das Zubereitungsmodul als Heizmodul mindestens eine Heizfläche aufweist, die mit mindestens einer Heizeinrichtung aufheizbar ist, und auf der mindestens ein Gefäß, insbesondere ein Topf oder ein Wok oder eine Pfanne, platziert werden kann.

Die Erfindung weist gegenüber dem Stand der Technik den Vorteil auf, dass durch das zeitlich unterschiedliche Kontaktieren der Leistungskontakte und des Hilfskontaktes bzw. der Hilfskontakte die erforderliche Einbringkraft reduziert wird, da die erforderliche Einbringkraft zeitlich aufgeteilt wird. Dadurch wird auch der Benutzerkomfort gesteigert. Werden die Hilfskontakte vor den Leistungskontakten kontaktiert, wird zudem die Benutzersicherheit gesteigert, da mindestens einer der Hilfskontakte üblicherweise als Schutzleiter ausgebildet ist und so der Schutzleiter vor den Leistungskontakten kontaktiert wird.

Eine erste Ausgestaltung des Küchengeräts sieht vor, dass die Leistungskontakte und/oder der Hilfskontakt und/oder die Leistungsgegenkontakte und/oder der Hilfsgegenkontakt auf einer gedachten, gemeinsamen Kreisbahn bzw. auf einem gedachten Kreis zueinander an unterschiedlichen Winkelpositionen an der Küchengerätebasis bzw. an dem Zubereitungsmodul angeordnet sind. Vorzugsweise sind die Winkelpositionen derart gewählt, dass das Zubereitungsmodul in mindestens zwei vorgesehenen Ausrichtungen in dem Aufnahmebereich elektrisch vollständig kontaktiert wird. Beispielsweise sind die Leistungskontakte und der Hilfskontakt bzw. die Hilfskontakte zueinander auf Kreissegmenten mit Winkeln von kleiner 90° zueinander beabstandet. Die Hilfskontakte sind zueinander vorzugsweise in einem Winkel von 10° bis 40°, insbesondere etwa 35° zueinander versetzt.

Die Leistungskontakte weisen auf dem gedachten Kreis vorteilhaft einen Abstand von mindestens 90°, vorzugsweise 180°, zueinander auf. Entsprechendes gilt für die Leistungsgegenkontakte und die Hilfsgegenkontakte am Zubereitungsmodul. Auf diese Weise kann insbesondere die elektrische Kontaktierung in mindestens zwei Ausrichtungen sichergestellt werden. Bevorzugt sind vier Leistungskontakte vorgesehen, die jeweils in einem Winkel von 90° zueinander angeordnet, insbesondere bewegbar, sind. Diese Ausgestaltung ist insbesondere dann vorteilhaft, wenn zwei Heizeinrichtungen am Zubereitungsmodul angeordnet sind.

Alternativ dazu ist auch vorgesehen, dass die Leistungskontakte und/oder der Hilfskontakt und/oder die Leistungsgegenkontakte und/oder der Hilfsgegenkontakt bzw. die mehreren Hilfskontakte bzw. mehreren Hilfsgegenkontakte auf gedachten, unterschiedlichen Kreisbahnen bzw. gedachten Kreisen mit unterschiedlichen Radien jeweils auf unterschiedlichen Winkelpositionen angeordnet sind.

Beispielsweise sind die Leistungskontakte und die Leistungsgegenkontakte auf einer gedachten Kreisbahn mit einem ersten Radius angeordnet. Die Hilfskontakte bzw. die Hilfsgegenkontakte sind jeweils auf einer Kreisbahn mit einem zweiten Radius angeordnet. Der erste Radius ist vorzugsweise kleiner oder größer als der zweite Radius.

Vorzugsweise sind mindestens vier Hilfskontakte bzw. mindestens vier Hilfsgegenkontakte jeweils als Gruppe vorgesehen, wobei eine zweite Gruppe mit vier Hilfsgegenkontakten bzw. Hilfskontakten auf dem Radius gegenüberliegend zu der ersten Gruppe angeordnet ist, so dass ein Zubereitungsmodul in zwei unterschiedlichen Ausrichtungen anordenbar ist und stets mindestens jeweils vier der Hilfskontakte mit den Hilfsgegenkontakten kontaktiert werden.

Gemäß einer weiteren, besonders bevorzugten Ausführungsform des erfindungsgemäßen Küchengerätes ist vorgesehen, dass mindestens einer der Leistungskontakte, vorzugsweise beide Leistungskontakte, und/oder zumindest der Hilfskontakt der elektrischen Schnittstelle aus einer Ruheposition zumindest in Richtung einer Kontaktposition, insbesondere zumindest zwischen einer Ruheposition und einer Kontaktposition, bewegbar ist. Der Leistungskontakt bzw. die Leistungskontakte und/oder der Hilfskontakt bzw. die Hilfskontakte sind folglich an der Küchengerätebasis bewegbar gehalten und zwischen einer Ruheposition, an der kein Kontakt vorhanden ist, und einer Kontaktposition, in der die entsprechenden Kontakte physikalisch mit Gegenkontakten kontaktiert sind, bewegbar.

Alternativ oder zusätzlich ist vorgesehen, dass mindestens einer der Leistungsgegenkontakte, vorzugsweise beide Leistungsgegenkontakte, und/oder zumindest der Hilfsgegenkontakt bzw. die Hilfsgegenkontakte der Gegenschnittstelle aus einer Ruheposition zumindest in Richtung einer Kontaktposition, insbesondere zumindest zwischen einer Ruheposition und einer Kontaktposition, an dem Zubereitungsmodul bewegbar sind. Der Leistungsgegenkontakt bzw. der Hilfsgegenkontakt sind folglich bewegbar am Zubereitungsmodul gehalten und werden während und/oder nach dem Anordnen des Zubereitungsmoduls aus einer Ruheposition zumindest in Richtung einer Kontaktposition bewegt.

Wenn vor- oder nachstehend die spezielle Bewegbarkeit nur eines einzelnen der Kontakte - Leistungskontakt, Leistungsgegenkontakt, Hilfskontakt, Hilfsgegenkontakt - im Singular beschrieben wird, soll damit auch stets eine Bewegbarkeit einer Mehrzahl des jeweiligen Kontakts - sofern vorhanden - im Plural offenbart sein. Erfindungsgemäß ist vorgesehen, dass nur ein Teil der Kontakte der elektrischen Schnittstelle und/oder der elektrischen Gegenschnittstelle oder alle Kontakte der elektrischen Schnittstelle und/oder der elektrischen Gegenschnittstelle von einer Ruheposition in eine Kontaktposition bewegbar sind.

Die Bewegung des Leistungskontakts, des Leistungsgegenkontakts, des Hilfskontakts und/oder des Hilfsgegenkontakts erfolgt rotativ, translatorisch oder als eine Kombination daraus. Die Bewegung erfolgt beispielsweise radial, also in einer Ebene, die beispielsweise parallel zu einer Standfläche der Küchengerätebasis ist, oder axial, also in eine Richtung, die orthogonal zu einer Standfläche der Küchengerätebasis ausgerichtet ist. Es ist auch vorgesehen, dass die Bewegung in einer Richtung erfolgt, die geneigt zur Standfläche der Küchengerätebasis ist. Beispielsweise wird der Hilfskontakt anders bewegt als der Leistungskontakt.

Vorzugsweise erfolgt die Bewegung des Leistungskontaktes, des Leistungsgegenkontakts, des Hilfskontaktes und/oder des Hilfsgegenkontakts während und/oder nach dem Anordnen des Zubereitungsmoduls in dem Aufnahmebereich. Es ist vorgesehen, dass die Bewegung der Kontakte bereits während des Anordnens des Zubereitungsmoduls in dem Aufnahmebereich beginnt und nach Abschluss des Anordnens oder gleichzeitig mit Abschluss des Anordnens beendet ist. Ferner ist auch vorgesehen, dass der Leistungskontakt, der Leistungsgegenkontakt, der Hilfskontakt und/oder der Hilfsgegenkontakt erst von der Ruheposition in die Kontaktposition bewegt wird/werden, wenn das Zubereitungsmodul abschließend im Aufnahmebereich angeordnet ist. Vorzugsweise erfolgt die Bewegung des Leistungskontaktes, des Leistungsgegenkontakts, des Hilfskontaktes und/oder des Hilfsgegenkontakts zumindest teilweise, insbesondere vollständig, gleichzeitig mit einer mechanischen Verriegelung des Zubereitungsmoduls mit der Küchengerätebasis. Ferner ist vorgesehen, dass die Bewegung des Leistungskontaktes, des Leistungsgegenkontakts, des Hilfskontaktes und/oder des Hilfsgegenkontakts zu einem anderen Zeitpunkt als die mechanische Verriegelung des Zubereitungsmoduls mit der Küchengerätebasis erfolgt, beispielsweise vor der mechanischen Verriegelung oder nach der mechanischen Verriegelung.

Es ist auch vorgesehen, dass die elektrische Kontaktierung zumindest teilweise gleichzeitig und zumindest teilweise vor oder nach der mechanischen Verriegelung erfolgt. Beispielsweise werden die Hilfskontakte vor der mechanischen Verriegelung kontaktiert und die Leistungskontakte zumindest teilweise gleichzeitig, vollständig gleichzeitig mit der Verriegelung, oder die Leistungskontakte werden nach der Verriegelung kontaktiert.

Dieses Ausführungsbeispiel weist gegenüber dem Stand der Technik den Vorteil auf, dass das Anordnen des Zubereitungsmoduls in dem Aufnahmebereich vereinfacht wird. Die Einbringkräfte für den Benutzer werden reduziert, da zumindest für einen Teil der Kontakte der elektrischen Schnittstelle bzw. der elektrischen Gegenschnittstelle beim Anordnen im Aufnahmebereich keine Einbringkräfte aufgebracht werden müssen, da zumindest dieser Teil der Kontakte erst anschließend durch die Bewegung kontaktiert wird. Ferner kann die Anzahl der Dichtungen reduziert werden, da das Risiko eines Kontakts mit Feuchtigkeit in der Ruheposition ohnehin reduziert ist.

Die Leistungskontakte, die Leistungsgegenkontakte, der Hilfskontakt und der Hilfsgegenkontakt sind gemäß einer weiteren Ausgestaltung der Erfindung aus einem elektrisch leitenden Material hergestellt, wobei zumindest ein Teil einer Kontaktfläche des jeweiligen Kontakts, insbesondere die Fläche, die im Kontaktfall mit dem zugehörigen Gegenkontakt in Kontakt steht, zur Reduzierung des Übergangswiderstands mit einer Beschichtung versehen ist. Dabei ist vorzugsweise vorgesehen, dass die Kontakte selbst aus einem kostengünstigen elektrisch leitenden Material, beispielsweise einem Stahl, insbesondere Federstahl oder einem rostfreien Stahl, hergestellt sind. Vorzugsweise umfasst die Beschichtung eine Legierung, die zumindest Gold und/oder Silber enthält oder ist aus Gold und/oder Silber hergestellt. Die Beschichtung ist beispielsweise mittels physikalischer Gasphasenabscheidung (PVD), chemischer Gasphasenabscheidung (CVD) oder beispielsweise mittels eines additiven Herstellungsverfahrens, z. B. 3D-Druck, auf die Kontakte aufgebracht. Vorzugsweise ist die Beschichtung durch Galvanisieren aufgebracht.

Gemäß einer weiteren Ausgestaltung des erfindungsgemäßen Küchengeräts ist besonders bevorzugt, dass der Leistungskontakt, der Hilfskontakt, der Leistungsgegenkontakt und/oder der Hilfsgegenkontakt zumindest mittelbar, insbesondere unmittelbar und/oder automatisch, mittels einer Antriebseinheit bewegbar sind/ist. Eine Antriebseinheit ist beispielsweise in der Küchengerätebasis und/oder in dem Zubereitungsmodul angeordnet. Die Antriebseinheit umfasst beispielsweise einen elektrischen Motor und mindestens ein Zahnrad, beispielsweise mindestens ein Schnecken-, Stirn- und/oder Kegelrad und/oder mindestens einen Antriebsriemen und/oder mindestens eine Antriebskette. Der Motor ist beispielsweise als rotierender Elektromotor oder als Linearmotor ausgebildet. Die Antriebseinheit ist vorzugsweise schwingungsgedämpft befestigt.

Alternativ dazu ist vorgesehen, dass an dem Motor ein Getriebe angeordnet ist, das insbesondere eine Mehrzahl von Zahnrädern aufweist. Die Antriebseinheit steht zumindest mittelbar mit den Leistungskontakten, dem Hilfskontakt, den Leistungsgegenkontakten und/oder dem Hilfsgegenkontakt mechanisch in Verbindung, so dass diese durch die Antriebseinheit bewegbar sind/ist.

Die Küchengerätebasis weist zudem insbesondere eine Steuereinrichtung auf. Die Antriebseinheit wird vorzugsweise von der Steuereinrichtung der Küchengerätebasis gesteuert, insbesondere veranlasst die Steuereinrichtung eine Bewegung in Richtung der Ruheposition bzw. der Kontaktposition. Die Steuereinrichtung umfasst vorzugsweise eine Leistungselektronik, um mindestens eine an der elektrischen Schnittstelle kontaktiertes Heizeinrichtung, beispielsweise eines Zubereitungsmoduls, zu betreiben.

Ferner ist vorgesehen, dass die Antriebseinheit mindestens eine Kupplungseinrichtung aufweist, beispielsweise mindestens eine Rutschkupplung. Vorzugsweise ist die Kupplungseinrichtung derart ausgebildet und in der Antriebseinheit angeordnet, dass sie bei Überschreiten mindestens eines Schwellenwerts für eine Kraft bei einer Bewegung und/oder eines Drehmoments auslöst, um eine Beschädigung der Antriebseinheit und/oder anderer Bauteile der Küchengerätebasis und/oder des Zubereitungsmoduls zu verhindern.

Gemäß einer weiteren Ausgestaltung des Küchengeräts ist vorgesehen, dass mindestens ein Antriebshebel vorhanden ist, und dass der Antriebshebel zumindest mittelbar, insbesondere unmittelbar, von der Antriebseinheit bewegbar, insbesondere rotierbar, ist. Der Antriebshebel steht mit der Antriebseinheit in Wirkverbindung. Die Leistungskontakte, der Hilfskontakt, die Leistungsgegenkontakte und/oder der Hilfsgegenkontakt wirken derart mit dem Antriebshebel zusammen, dass eine Bewegung des Antriebshebels eine Bewegung mindestens eines der Leistungskontakte, zumindest des Hilfskontakts, mindestens eines der Leistungsgegenkontakte und/oder zumindest des Hilfsgegenkontakts aus der Ruheposition in die Kontaktposition bewirkt. Beispielsweise sind die die Leistungskontakte, der Hilfskontakt, die Leistungsgegenkontakte und/oder der Hilfsgegenkontakt zumindest mittelbar formschlüssig mit dem Antriebshebel in Verbindung. Der Antriebshebel ist beispielsweise ringförmig, scheibenförmig oder als Kreissegment ausgebildet. Es ist insbesondere auch vorgesehen, dass anstelle des Antriebshebels eine Mehrzahl von Stirnradstufen angeordnet sind, die eine Bewegung der vorgenannten Kontakte bewirken.

Insbesondere um die Benutzersicherheit weiter zu steigern, ist gemäß einer weiteren Ausgestaltung vorgesehen, dass mindestens einer der Leistungskontakte, zumindest der Hilfskontakt, mindestens einer der Leistungsgegenkontakte und/oder zumindest der Hilfsgegenkontakt an mindestens einem Kontaktträger, vorzugsweise jeweils an mindestens einem Kontaktträger, angeordnet sind/ist. Der Kontaktträger ist zusammen mit dem jeweiligen Kontakt bewegbar gehalten. Beispielsweise ist der jeweilige Kontaktträger an der Küchengerätebasis oder an dem Zubereitungsmodul geführt, so dass er radial, axial, translatorisch und/oder rotatorisch bewegbar ist. Vorzugsweise ist der Kontaktträger bzw. sind die Kontaktträger an jeweils mindestens einer Führungsschiene der Küchengerätebasis geführt.

Vorzugsweise ist vorgesehen, dass zwei Leistungskontakte vorhanden sind, und dass jeder Leistungskontakt einen Kontaktträger aufweist. Ferner ist vorgesehen, dass zwei Kontaktträger vorhanden sind, und dass jeder Kontaktträger zwei, insbesondere voneinander isolierte, Leistungskontakte aufweist. Zudem ist vorgesehen, dass vier Kontaktträger vorgesehen sind, wobei jeder Kontaktträger einen oder zwei Leistungskontakte aufweist, insbesondere wobei die Kontaktträger etwa 90° zueinander versetzt angeordnet sind. Dabei ist vorgesehen, dass jeder Kontaktträger separat zur elektrischen Leistungskontaktierung eines Zubereitungsmoduls dient und ein Zubereitungsmodul entsprechend der Anordnung der Kontaktträger in zwei Ausrichtungen auf der Küchengerätebasis anordenbar ist. Ferner ist vorgesehen, dass ein Kontaktträger zwei, insbesondere voneinander isolierte, Leistungskontakte aufweist, diese aber zum elektrischen Kontaktieren von zwei Heizeinrichtungen der Küchengerätebasis verwendet werden, so dass gleichzeitig an mindestens einem weiteren Kontaktträger mindestens ein weiterer Leistungskontakt, vorzugsweise zwei weitere Leistungskontakte, angeordnet sind.

Ferner ist vorgesehen, dass alle Hilfskontakte an einem einzigen Kontaktträger angeordnet sind oder dass jeweils zwei oder jeweils vier Hilfskontakte an einem Kontaktträger angeordnet sind.

Der Kontaktträger ist bzw. die Kontaktträger sind vorzugsweise aus einem schwer entflammbaren Kunststoff hergestellt. Vorzugsweise genügt der Kunststoff des Kontaktträgers bzw. der Kontaktträger den Anforderungen des Tests gemäß UL94 des Underwriter's Laboratories und/oder der Norm DIN EN 60695-11-10 VDE 0471 - 11-10:2014-10 und/oder der Norm DIN EN 60695-11-20:2016-04. Auf diese Weise sind erhöhte Anforderungen an den Brandschutz gewährleistet.

Die Kontaktträger umschließen die Kontakte zumindest teilweise, so dass insbesondere bei den Leistungskontakten, das Risiko einer Berührung durch einen Benutzer deutlich reduziert wird.

Zur Bewegung des Leistungskontakts, des Hilfskontakts, des Leistungsgegenkontakts und/oder des Hilfsgegenkontakts hat sich als vorteilhaft herausgestellt, wenn gemäß einer weiteren Ausgestaltung vorgesehen ist, dass der Antriebshebel mindestens eine Kulissenausnehmung zum Zusammenwirken mit mindestens einem Aktuatorvorsprung an dem Kontaktträger aufweist. Die Kulissenausnehmung ist vorzugsweise für den Kontaktträger bzw. für jeden Kontaktträger derart geformt, dass eine Rotationsbewegung des Antriebshebels durch Zusammenwirken der Kulissenausnehmung mit dem Aktuatorvorsprung in eine translatorische Bewegung des Kontaktträgers umgesetzt wird. Vorzugsweise werden mindestens zwei Kontaktträger, die jeweils mindestens einen Leistungskontakt oder Leistungsgegenkontakt tragen, gleichzeitig von dem Antriebshebel bewegt. Insbesondere werden die beiden Kontaktträger in zueinander entgegengesetzte oder in etwa 90° zueinander versetzte Richtungen bewegt.

Als ferner vorteilhaft hat sich gemäß einer weiteren Ausgestaltung des Küchengeräts herausgestellt, dass an der Küchengerätebasis, insbesondere im Aufnahmebereich der Küchengerätebasis, mindestens ein Kontaktträgermodul angeordnet ist. Vorzugsweise ist das Kontaktträgermodul scheibenartig ausgebildet. Es ist vorgesehen, dass der Leistungskontakt und/oder der Hilfskontakt, insbesondere der Kontaktträger mit dem jeweiligen Leistungskontakt oder Hilfskontakt, in der Ruheposition vollständig in das Kontaktträgermodul eingefahren ist/sind. In der Ruheposition schließen die Kontaktträger insbesondere bündig mit einer Umfangsfläche des Kontaktträgermoduls ab. Vorzugsweise sind sämtliche Kontaktträger in der Ruheposition in das Kontaktträgermodul eingefahren, so dass die darin angeordneten Kontakte in der Ruheposition gegen Berührung geschützt sind.

Ferner ist vorgesehen, dass der Leistungskontakt und/oder der Hilfskontakt, insbesondere die jeweiligen Kontaktträger mit den vorgenannten Kontakten, in der Kontaktposition zumindest teilweise aus dem Kontaktträgermodul hervorstehen, jedenfalls so, dass der jeweilige Leistungskontakt und/oder Hilfskontakt kontaktierbar ist. Auf diese Weise ist sichergestellt, dass der Leistungskontakt und/oder der Hilfskontakt nur dann hervorstehen, wenn sie wirklich benötigt werden. Vorzugsweise ist vorgesehen, dass der Kontaktträger bzw. alle Kontaktträger derart ausgebildet sind, dass auch in der Kontaktposition eine Berührung durch einen Benutzer verhindert wird, beispielsweise dadurch, dass nur so enge Spalte zur Kontaktierung, beispielsweise mit einem als Kontaktmesser ausgebildeten Leistungsgegenkontakt, vorhanden sind, dass diese nicht von einem Finger durchtreten werden können. Vorzugsweise ist jeder der Kontaktträger an dem Kontaktträgermodul der Küchengerätebasis translatorisch bewegbar gehalten, insbesondere radial ausgerichtet auf einen Mittelpunkt des vorzugsweise im Wesentlichen kreisrunden Kontaktträgermoduls.

Vorteilhaft ist vorgesehen, dass die Hilfskontakte an mindestens einer Umfangsfläche des Kontaktträgermoduls angeordnet sind. Die Umfangsfläche des Kontaktträgermoduls erstreckt sich vorzugsweise im Wesentlichen orthogonal zu einer Oberseite der Küchengerätebasis. Ferner ist vorgesehen, dass die Leistungskontakte derart angeordnet sind, dass sie, insbesondere mit den Kontaktträgern, aus der Umfangsfläche hervortreten bzw. in der Umfangsfläche verschwinden, wenn sie in der Ruheposition sind.

Um die Benutzersicherheit weiter zu steigern, ist gemäß einer weiteren Ausgestaltung vorgesehen, dass an einer Umfangsfläche des Kontaktträgermoduls in der Ruheposition ein Spalt zwischen dem Kontaktträger, insbesondere einem Kopfbereich des Kontaktträgers, und dem Kontaktträgermodul derart ausgebildet ist, dass das Risiko eines Flüssigkeitseintritts minimiert ist. Beispielsweise ist der Spalt mit einer sehr geringen Toleranz ausgebildet, so dass bereits aus konstruktiven Gründen keine oder nur eine sehr geringe Menge Flüssigkeit eintreten kann. Insbesondere ist dadurch ein Spritzschutz gewährleistet.

Ferner ist vorgesehen, dass zwischen dem Kontaktträgermodul und dem Kontaktträger mindestens ein Dichtmittel angeordnet ist, so dass das Eindringen von Flüssigkeit in den Spalt zwischen Kontaktträgermodul und Kontaktträger durch das Dichtmittel verhindert wird. Das Dichtmittel weist beispielsweise mindestens eine Dichtlippe und/oder mindestens eine Labyrinthdichtung und/oder mindestens eine Kontaktdichtung auf.

Der Bedienkomfort des Küchengeräts lässt sich gemäß einer weiteren Ausgestaltung vorteilhaft dadurch steigern, dass die Küchengerätebasis mindestens ein Verriegelungselement aufweist. Das Verriegelungselement ist zwischen einer Freigabeposition und einer Verriegelungsposition bewegbar, insbesondere rotierbar, gehalten. In der Freigabeposition ist das Zubereitungsmodul in mindestens zwei Ausrichtungen in dem Aufnahmebereich anordenbar. In der Verriegelungsposition wird eine mechanische Verriegelung des Zubereitungsmoduls mit der Küchengerätebasis bewirkt. Zumindest die Leistungskontakte befinden sich in der Verriegelungsposition des Verriegelungselements in ihrer Kontaktposition. In der Freigabeposition des Verriegelungselements befinden sich zumindest die Leistungskontakte in der Ruheposition.

Es ist vorgesehen, dass das Zubereitungsmodul in der Freigabeposition des Verriegelungselements in mindestens zwei unterschiedlichen Ausrichtungen in dem Aufnahmebereich anordenbar ist. "Zwei unterschiedliche Ausrichtungen" bedeutet in diesem Zusammenhang, dass das Zubereitungsmodul in mindestens zwei unterschiedlichen, insbesondere zueinander gedrehten Ausrichtungen, in dem einen Aufnahmebereich anordenbar ist. Ein Bedienmittel des Zubereitungsmoduls ist in einer ersten Ausrichtung beispielsweise nach rechts orientiert, in einer zweiten Ausrichtung beispielsweise nach links orientiert.

Bevorzugt ist vorgesehen, dass die Ausrichtungen des Zubereitungsmoduls im Aufnahmebereich um mindestens 90° zueinander versetzt sind. Das Zubereitungsmodul ist insbesondere um genau zwei, insbesondere vier, zueinander mindestens 90° versetzten Anordnungen im Aufnahmebereich anordenbar. Es ist auch vorgesehen, dass die beiden Ausrichtungen um genau 180° zueinander versetzt sind. In beiden Ausrichtungen erfolgt eine gewünschte Kontaktierung der vorhandenen Kontakte der elektrischen Schnittstelle bzw. der elektrischen Gegenschnittstelle. Beispielsweise ist das Zubereitungsmodul in mindestens zwei, insbesondere genau zwei, mindestens drei, insbesondere genau drei, oder mindestens vier, insbesondere genau vier, Ausrichtungen in den Aufnahmebereich anorden- und verriegelbar.

Vorteilhaft ist vorgesehen, dass das Verriegelungselement von der Antriebseinheit zumindest mittelbar, insbesondere unmittelbar, bewegbar, insbesondere rotierbar, ist. Die Antriebseinheit ist dabei insbesondere derart angeordnet, dass sie sich außerhalb des Drehpunktes des Verriegelungselementes befindet. Beispielsweise ist vorgesehen, dass die Antriebseinheit auf den Antriebshebel wirkt, der formschlüssig mit dem Verriegelungselement verbunden ist. Eine Bewegung, insbesondere Rotation des Antriebshebels, bewirkt folglich eine Rotation des Verriegelungselementes, insbesondere zwischen einer Freigabeposition und einer Verriegelungsposition. Insbesondere ist das Verriegelungselement zwischen Oberseite der Küchengerätebasis und Kontaktträgermodul angeordnet.

Vorzugsweise sind das Verriegelungselement und/oder der Antriebshebel um eine Achse rotierbar, die auch der Rotationsachse einer Arbeitseinheit, insbesondere eines Motors, zum Antrieb eines Werkzeugs, vorzugsweise innerhalb eines Zubereitungsmoduls, entspricht. Vorzugsweise ist eine Welle zur Übertragung eines Drehmoments auf ein Werkzeug zentral in der Küchengerätebasis angeordnet, so dass sie von dem Verriegelungselement und/oder dem Antriebshebel umgeben ist. Insbesondere weisen der Antriebshebel und/oder das Verriegelungselement eine zentrale Ausnehmung auf.

Es ist bevorzugt, dass gleichzeitig mit der Bewegung mindestens eines Kontakts der vorgenannten Kontakte auch eine Verriegelung eines Zubereitungsmoduls mit der Küchengerätebasis erfolgt. Vorzugsweise ist vorgesehen, dass zumindest die Leistungskontakte in der Verriegelungsposition des Verriegelungselementes in der Kontaktposition sind und in der Freigabeposition des Verriegelungselementes in ihrer Ruheposition. Mit dem Verriegeln des Zubereitungsmoduls mit der Küchengerätebasis erfolgt dann auch eine Kontaktierung der Leistungskontakte.

Es ist insbesondere vorgesehen, dass das Verriegelungselement derart ausgebildet ist, dass es das Zubereitungsmodul unmittelbar verriegelt, also in der Verriegelungsposition formschlüssig mit dem Zubereitungsmodul zusammenwirkt. Alternativ dazu ist vorgesehen, dass das Verriegelungselement seine Bewegung auf ein Verriegelungsgegenelement am Zubereitungsmodul überträgt, wobei dann das Verriegelungsgegenelement, insbesondere in der Verriegelungsposition, formschlüssig mit Verriegelungskonturen an der Oberseite der Küchengerätebasis zusammenwirkt. Jede Verriegelungskontur erstreckt sich vorzugsweise von einer Oberseite der Küchengerätebasis, insbesondere im Wesentlichen senkrecht nach oben.

Gemäß einer weiteren Ausführungsform der erfindungsgemäßen Küchengerätebasis ist vorgesehen, dass das Verriegelungselement mindestens eine Mitnehmerkontur aufweist. Die Mitnehmerkontur ist zum Zusammenwirken mit einer Mitnehmergegenkontur an dem Verriegelungsgegenring am Zubereitungsmodul ausgebildet. Die Mitnehmerkontur am Verriegelungselement steht beispielsweise am Verriegelungselement hervor. Vorzugsweise sind mindestens zwei Mitnehmerkonturen am Verriegelungselement vorgesehen, die insbesondere gegenüberliegend zueinander auf einem Umfang angeordnet sind. Insbesondere sind mindestens drei, genau drei, mindestens vier oder genau vier Mitnehmerkonturen sowie zugehörige Mitnehmergegenkonturen vorgesehen.

Die Mitnehmerkontur ist derart ausgebildet, dass sie formschlüssig mit einer Mitnehmergegenkontur an einem Verriegelungsgegenelement, insbesondere Verriegelungsgegenring, am Zubereitungsmodul zusammenwirken kann. Insbesondere ist mittels der Mitnehmerkontur eine Rotation des Verriegelungselementes auf das Verriegelungsgegenelement am Zubereitungsmodul übertragbar. Beispielsweise ist die Mitnehmerkontur als Mitnehmerrippe und/oder die Mitnehmergegenkontur als korrespondierender Mitnehmerspalt ausgebildet. Das formschlüssige Zusammenfügen der Mitnehmerkontur und der Mitnehmergegenkontur erfolgt durch Anordnen des Zubereitungsmoduls im Aufnahmebereich. Die Mitnehmerkonturen und/oder die Mitnehmergegenkonturen sind derart ausgebildet und angeordnet, dass das Zubereitungsmodul in zwei unterschiedlichen Ausrichtungen, insbesondere im Aufnahmebereich, anordenbar ist.

Das Verriegelungsgegenelement ist rotierbar, insbesondere in einem Fußabschnitt des Zubereitungsmoduls, gelagert. An dem Verriegelungsgegenelement ist mindestens ein Verriegelungsabschnitt, insbesondere sind mindestens zwei, insbesondere mindestens drei oder mindestens vier Verriegelungsabschnitte, ausgebildet. Das Verriegelungsgegenelement ist von dem Verriegelungselement zwischen einer Freigabeposition und einer Verriegelungsposition bewegbar. Wenn sich das Verriegelungselement in der Verriegelungsposition befindet, befindet sich auch das Verriegelungsgegenelement in der Verriegelungsposition. Befindet sich das Verriegelungselement in der Freigabeposition, befindet sich auch das Verriegelungsgegenelement in der Freigabeposition.

In der Verriegelungsposition wirkt der Verriegelungsabschnitt bzw. wirken die Verriegelungsabschnitte des Verriegelungsgegenelements formschlüssig mit mindestens einer Verriegelungskontur an der Oberseite der Küchengerätebasis zusammen, wodurch das Zubereitungsmodul formschlüssig mit der Küchengerätebasis verbunden wird. Vorzugsweise sind auf der Oberseite der Küchengerätebasis mindestens zwei, insbesondere genau zwei, mindestens drei, insbesondere genau drei, mindestens vier, insbesondere genau vier, mindestens fünf, insbesondere genau fünf, oder mindestens sechs, insbesondere genau sechs, Verriegelungskonturen vorgesehen.

Die Verriegelungskontur ist bzw. die Verriegelungskonturen sind vorzugsweise hakenförmig ausgebildet, so dass ein jeweiliger Verriegelungsabschnitt des Verriegelungsgegenelements unter die hakenförmigen Verriegelungskonturen rotieren kann, um ein Zubereitungsmodul mit der Küchengerätebasis zu verriegeln. Vorzugsweise sind die Verriegelungskonturen derart ausgebildet und eingerichtet, dass sie den Aufnahmebereich der Küchengerätebasis definieren.

Die Erfindung betrifft ferner eine Küchengerätebasis, insbesondere für ein Küchengerät nach mindestens einem der vorbeschriebenen Ausführungsbeispiele. Die Küchengerätebasis zeichnet sich dadurch aus, dass mindestens einer der Leistungskontakte und/oder mindestens der Hilfskontakt insbesondere während und/oder nach dem Anordnen des Zubereitungsmoduls in dem Aufnahmebereich aus einer Ruheposition zumindest in Richtung einer Kontaktposition, vorzugsweise zwischen einer Ruheposition und einer Kontaktposition, an der Küchengerätebasis bewegbar ist. Mindestens einer der Kontakte, zumindest ein Teil der Kontakte oder alle Kontakte sind vorzugsweise bewegbar ausgebildet, so dass die Kontakte erst in ihrer Kontaktposition bewegt werden, wenn das Zubereitungsmodul in dem Aufnahmebereich der Küchengerätebasis angeordnet ist.

Es ist vorgesehen, dass die Küchengerätebasis gemäß der im Rahmen der Ausgestaltung des erfindungsgemäßen Küchengeräts beschriebenen Ausführungsbeispiele ausgestaltet und weitergebildet ist.

Ferner betrifft die Erfindung ein Zubereitungsmodul, insbesondere für ein Küchengerät nach einem der vorbeschriebenen Ausführungsbeispiele. Das Zubereitungsmodul weist mindestens zwei Leistungsgegenkontakte und mindestens einen Hilfsgegenkontakt auf, wobei mindestens einer der Leistungsgegenkontakte und/oder der Hilfsgegenkontakt, insbesondere während oder nach dem Anordnen des Zubereitungsmoduls in dem Aufnahmebereich, aus einer Ruheposition zumindest in Richtung einer Kontaktposition, vorzugsweise zwischen einer Ruheposition und einer Kontaktposition, an dem Zubereitungsmodul bewegbar ist. Das Bewegen der vorgenannten Kontakte oder eines Teils der vorgenannten Kontakte erfolgt mittelbar oder unmittelbar durch den Antriebshebel und/oder das Verriegelungselement und/oder das Verriegelungsgegenelement.

Es ist vorgesehen, dass das Zubereitungsmodul gemäß der im Rahmen der Ausgestaltung des erfindungsgemäßen Küchengeräts beschriebenen Ausführungsbeispiele ausgestaltet und weitergebildet ist.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit Zubereitungsmodul und Küchengerätebasis in perspektivischer Ansicht,
- Fig. 2: ein Ausführungsbeispiel einer Küchengerätebasis in perspektivischer Ansicht,
- Fig. 3: ein Ausführungsbeispiel einer Küchengerätebasis in perspektivischer Ansicht in einem ersten Zustand,
- Fig. 4: das Ausführungsbeispiel gemäß Fig. 3 in perspektivischer Ansicht in einem zweiten Zustand,
- Fig. 5: ein Ausführungsbeispiel eines Kontaktträgers,
- Fig. 6a: ein Ausführungsbeispiel eines Leistungskontaktes,
- Fig. 6b: ein erstes Ausführungsbeispiel eines Hilfskontakts,
- Fig. 6c: ein zweites Ausführungsbeispiel eines Hilfskontakts,
- Fig. 7: ein Ausführungsbeispiel eines Kontaktträgermoduls für eine Küchengerätebasis,
- Fig. 8: einen teilweisen Schnitt durch ein Küchengerät mit Zubereitungsmodul und Küchengerätebasis,
- Fig. 9: eine Draufsicht auf eine Küchengerätebasis mit einem Verriegelungsgegenelement in einem ersten Zustand,
- Fig. 10: eine Draufsicht auf eine Küchengerätebasis mit einem Verriegelungsgegenelement in einem zweiten Zustand,
- Fig. 11: ein Ausführungsbeispiel eines Fußabschnitts eines Zubereitungsmoduls,
- Fig. 12: eine Teilansicht eines Kontaktträgermoduls mit Verriegelungselement und Antriebshebel,
- Fig. 13: ein Ausführungsbeispiel eines Antriebshebels, und
- Fig. 14: ein weiteres Ausführungsbeispiel eines Fußabschnitts eines Zubereitungsmoduls.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

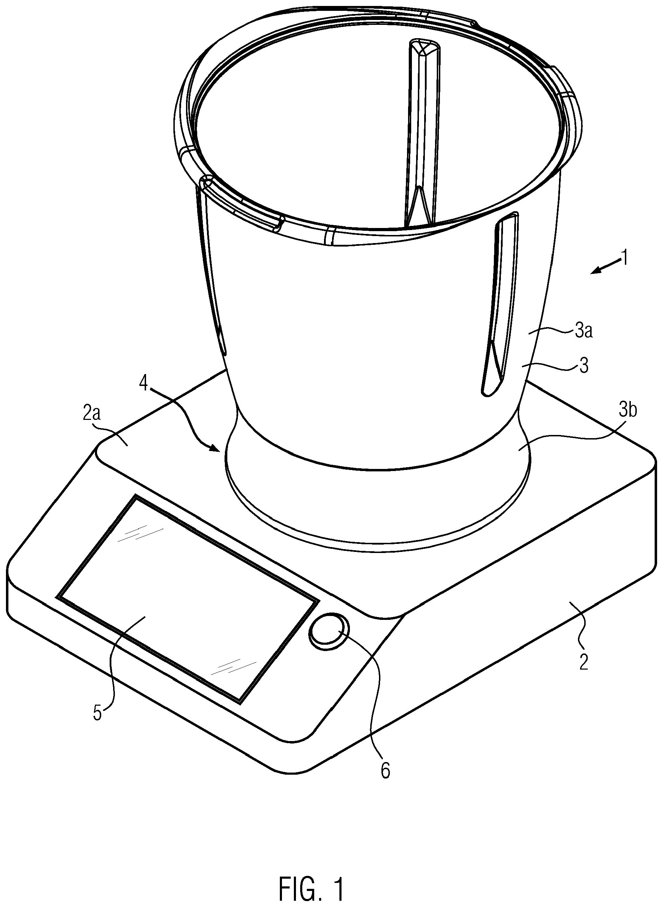

Fig. 1 zeigt ein Küchengerät 1 mit einer Küchengerätebasis 2 und einem Zubereitungsmodul 3. Das Zubereitungsmodul 3 ist bei diesem Ausführungsbeispiel als Zubereitungsgefäß ausgebildet. Gemäß Fig. 1 ist das Zubereitungsmodul in einem Aufnahmebereich 4 der Küchengerätebasis 2 angeordnet. Die Küchengerätebasis 2 verfügt über eine Bedien- und Anzeigeeinrichtung 5. Zusätzlich kann mindestens ein Bedienmittel 6, das hier als Drück- und Drehknopf ausgebildet ist, vorhanden sein. Mit der Bedien- und Anzeigeeinrichtung 5 und dem Bedienmittel 6 lassen sich Funktionen steuern und Programme, insbesondere Zubereitungsprogramme, starten. Eine Oberseite 2a der Küchengerätebasis 2 ist im Wesentlichen eben und parallel zu einer Standfläche der Küchengerätebasis 2 bei der üblichen Verwendung ausgebildet.

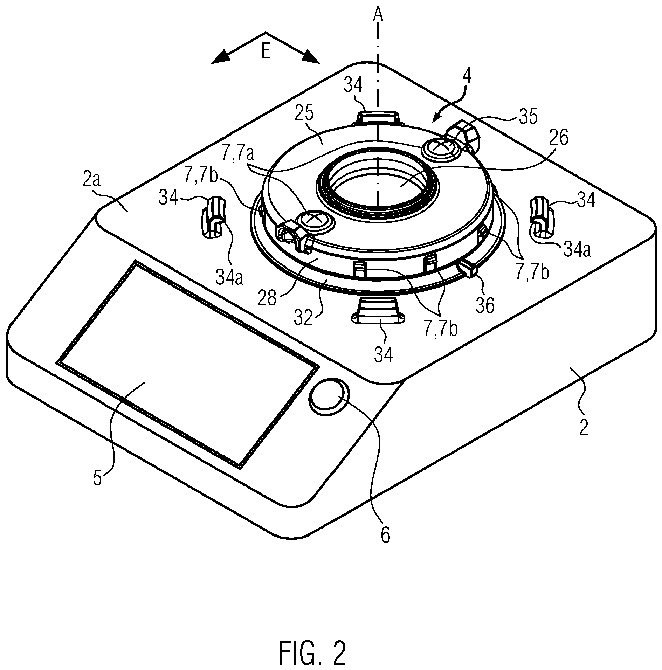

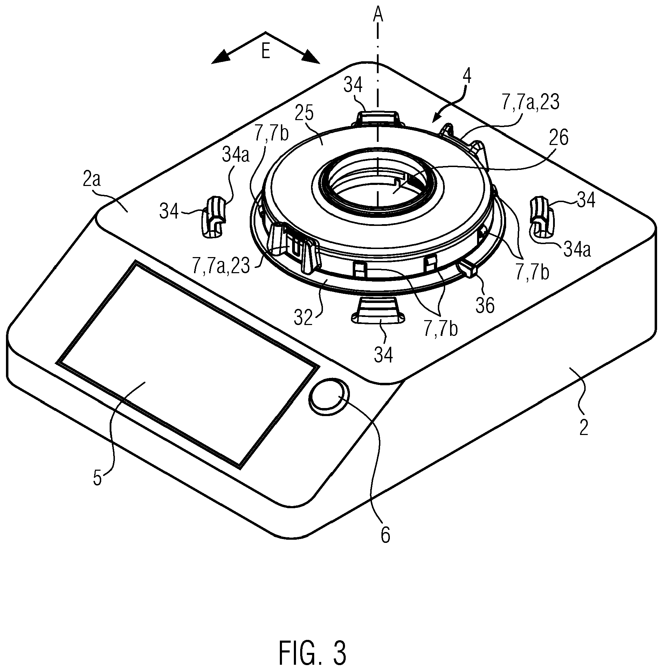

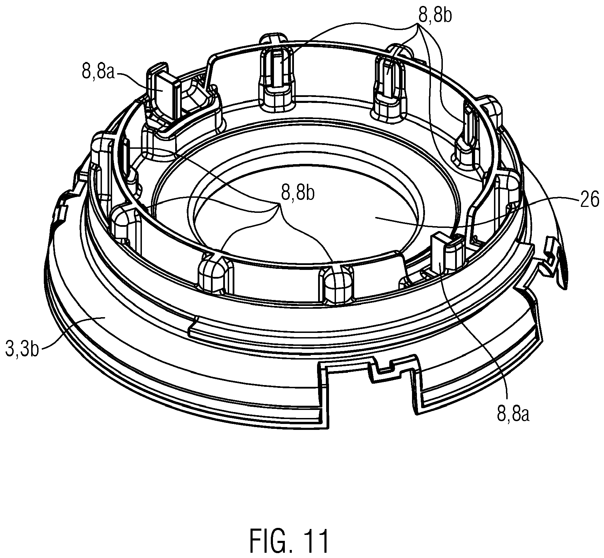

Die Küchengerätebasis 2 weist ferner eine elektrische Schnittstelle 7 auf, die in verschiedenen Ausführungsbeispielen in den Fig. 2, 3, 4 und 7 dargestellt ist. Die elektrische Schnittstelle 7 gemäß den Ausführungsbeispielen der Fig. 3 und Fig. 4 sowie der Fig. 7 ist mit einer beispielhaft in Fig. 11 dargestellten elektrischen Gegenschnittstelle 8 kontaktierbar.

Die elektrische Schnittstelle 7 weist gemäß Fig. 2, 3, 4 und 7 jeweils zwei Leistungskontakte 7a sowie insgesamt acht Hilfskontakte 7b auf. Die Hilfskontakte 7b sind gruppenweise in zwei Gruppen mit jeweils vier Hilfskontakten ausgebildet, um das Aufbringen des Zubereitungsmoduls 3 in mindestens zwei unterschiedlichen Ausrichtungen bei gleichzeitiger Kontaktierung der Hilfskontakte 7b zu ermöglichen. Gemäß dem Ausführungsbeispiel der Fig. 11 weist die Gegenschnittstelle 8 zwei Leistungsgegenkontakte 8a, die hier als Kontaktmesser ausgebildet sind, sowie insgesamt acht Hilfsgegenkontakte 8b auf, die hier als Kontaktflächen ausgebildet sind. Die Hilfsgegenkontakte 8b sind bei diesem Ausführungsbeispiel gruppenweise mit jeweils vier Hilfsgegenkontakten 8b ausgebildet. Jeweils ein Leistungskontakt 7a ist mit einem Leistungsgegenkontakt 8a kontaktierbar. Ferner ist jeweils ein Hilfskontakt 7b mit einem korrespondierenden Hilfsgegenkontakt 8b kontaktierbar.

Die Leistungskontakte 7a dienen beispielsweise der elektrischen Kontaktierung einer in dem Zubereitungsmodul 3 angeordneten Heizeinrichtung. Die Hilfskontakte 7b dienen beispielsweise der Kontaktierung eines Schutzleiters und/oder zwei Hilfskontakte 7b dienen der Übertragung von Signalen für mindestens einen im Zubereitungsmodul 3 angeordneten Temperatursensor, insbesondere mindestens eines Thermoelementes, und/oder mindestens ein Hilfskontakt 7b dient der Kontaktierung mindestens eines Deckelkontaktes des Zubereitungsmoduls 3.

Fig. 2 zeigt ein Ausführungsbeispiel einer Küchengerätebasis 2 in perspektivischer Ansicht. Die Leistungskontakte 7a sind im Aufnahmebereich auf einer gedachten Kreisbahn mit einem geringeren Radius angeordnet als die Hilfsgegenkontakte 8b, die auf einer gedachten Kreisbahn mit einem größeren Radius angeordnet sind. Die Leistungskontakte 7a sind als Kontaktbuchsen ausgebildet. Die Leistungskontakte 7a sind mit einer durchtretbaren Dichtkappe 35 gegen den Eintritt von Flüssigkeit und Schmutz gesichert. Die Dichtkappen 35 sind dazu mit Schlitzen ausgebildet. Die Hilfskontakte 7b sind als federnde Kontaktklammern ausgebildet.

Die Hilfskontakte 7b werden beim Anordnen eines Zubereitungsmoduls 3 im Aufnahmebereich 4 zeitlich vor den Leistungskontakten 7a, also zu einem unterschiedlichen Zeitpunkt, elektrisch kontaktiert. "Elektrisch kontaktiert" bedeutet dabei nicht das tatsächliche Beaufschlagen mit Spannung oder einem Signal, sondern lediglich die physikalische Kontaktierung mit der theoretischen Möglichkeit einer Strom- bzw. Signalleitung.

Auf der jeweils gedachten Kreisbahn sind die Leistungskontakte 7a bzw. die Hilfskontakte 7b an unterschiedlichen Winkelpositionen zueinander angeordnet. Die Leistungskontakte 7a weisen einen Winkel von etwa 180° zueinander auf. Die Hilfskontakte 7b, insbesondere die Hilfskontakte 7b einer Gruppe mit vier Hilfskontakten 7b, weisen etwa einen Winkel von 35° zueinander auf. Die beiden Gruppen mit jeweils vier Hilfskontakten 7b sind gegenüberliegend auf der Kreisbahn angeordnet. Die Leistungskontakte 7a sind zwischen den beiden Gruppen der Hilfskontakte 7b angeordnet. Durch diese Anordnung ist vorteilhaft ein Anordnen einen Zubereitungsmoduls 3 in zwei unterschiedlichen Ausrichtungen ermöglicht, wobei eine vollständige elektrische Kontaktierung des Zubereitungsmoduls 3 in beiden Ausrichtungen erfolgen kann.

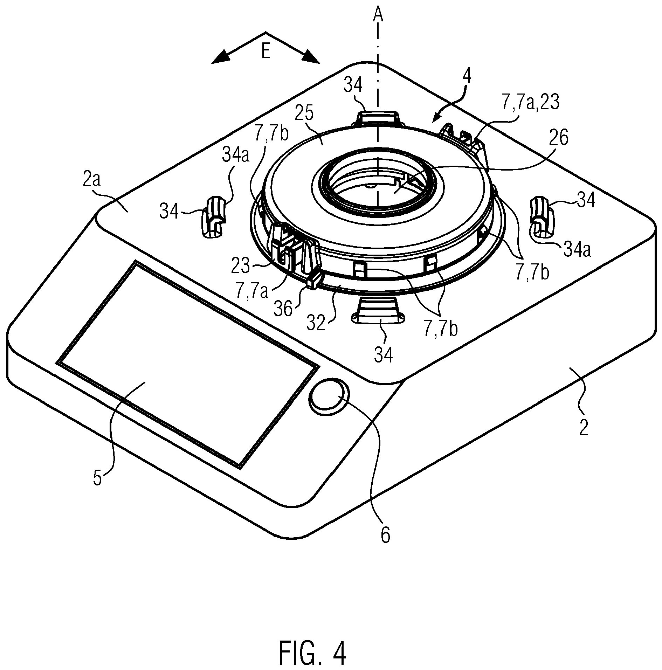

Fig. 3 und Fig. 4 zeigen ein Ausführungsbeispiel einer Küchengerätebasis 2, bei der die Hilfskontakte 7b der elektrischen Schnittstelle 7 ortsfest auf einer gedachten Kreisbahn mit einem Winkelabstand von etwa 35° zueinander angeordnet sind. Die Leistungskontakte 7a der elektrischen Schnittstelle 7 sind zwischen einer in Fig. 3 dargestellten Ruheposition und einer in Fig. 4 dargestellten Kontaktposition bewegbar. Die beiden Leistungskontakte 7a sind entgegengesetzt zueinander bewegbar. Das Bewegen der Leistungskontakte 7a erfolgt vorteilhaft nach dem Anordnen eines Zubereitungsmoduls 3 in dem Aufnahmebereich 4. Auf diese Weise muss der Benutzer beim Anordnen eines Zubereitungsmoduls 3 in dem Aufnahmebereich 4 der Küchengerätebasis 2 lediglich die Federkraft der Hilfskontakte 7b beim Aufbringen überwinden, wodurch die Einbringkraft reduziert wird.

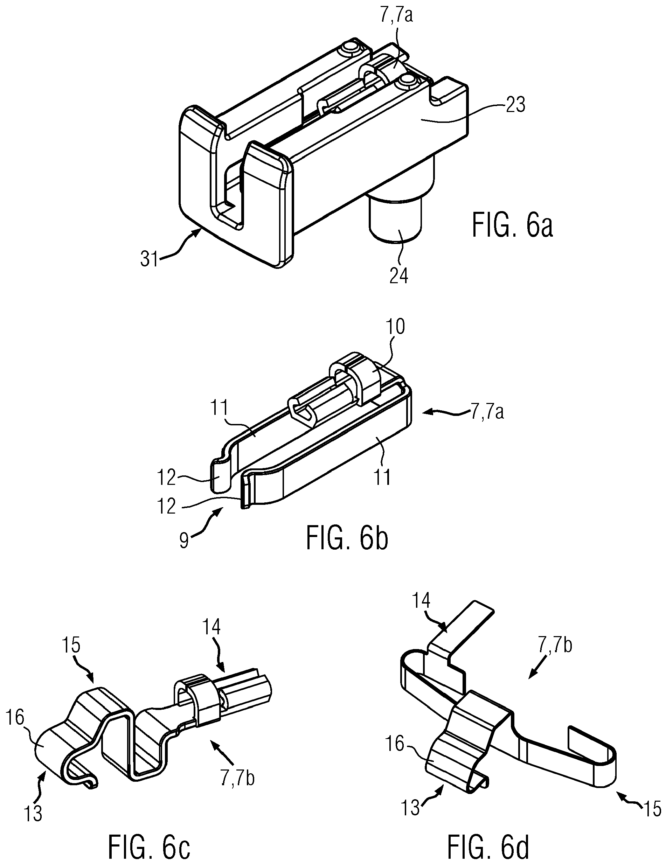

Ein Ausführungsbeispiel eines Leistungskontakts 7a ist in Fig. 6a in perspektivischer Ansicht dargestellt. Der Leistungskontakt 7a weist einen Kontaktbereich 9 und einen Anschlussbereich 10 auf. Im Anschlussbereich 10 ist eine - nicht dargestellte - elektrische Leitung vercrimpbar, um den Leistungskontakt 7a zu kontaktieren. Es ist auch vorgesehen, dass der Leistungskontakt 7a durch Schneidklemmen, Löten oder Schweißen befestigt wird. Der Leistungskontakt 7a weist zwei gegenüberliegend verlaufende Kontaktarme 11 auf, die im Kontaktbereich 9 konvex aufeinander zu gewölbt sind. An jedem der Kontaktarme 11 ist im Kontaktbereich 9 eine Kontaktfläche 12 mit einer Silberlegierung beschichtet, um den elektrischen Übergangswiderstand zu reduzieren. Im Kontaktbereich 9 weist der Leistungskontakt 7a eine Einführschräge auf, um einen Leistungsgegenkontakt 8a vorteilhaft zu kontaktieren.

Fig. 6b zeigt ein Ausführungsbeispiel eines Hilfskontakts 7b in perspektivischer Ansicht. Auch der Hilfskontakt 7b weist einen Kontaktbereich 13 und einen Anschlussbereich 14 auf. Im Anschlussbereich 14 ist eine - nicht dargestellte - elektrische Leitung vercrimpbar. Der Hilfskontakt 7b weist eine im Wesentlichen stufenförmige Haltekontur 15 auf, die in einen federnd gehaltenen, konvex gewölbten Kontaktbereich 13 übergeht. Im Kontaktbereich 13 ist eine Kontaktfläche 16 mit einer Beschichtung aus einer Silberlegierung beschichtet.

Fig. 6c zeigt ein alternatives Ausführungsbeispiel eines Hilfskontaktes 7b in perspektivischer Ansicht. Der Anschlussbereich 14 ist hier zum Verlöten mit einer - nicht dargestellten - elektrischen Leitung ausgebildet. Ausgehend von einem Haltebereich 15 erstreckt sich der Kontaktbereich 13, der ebenfalls konvex gewölbt ist und eine mit einer Beschichtung aus einer Silberlegierung versehene Kontaktfläche 16 aufweist.

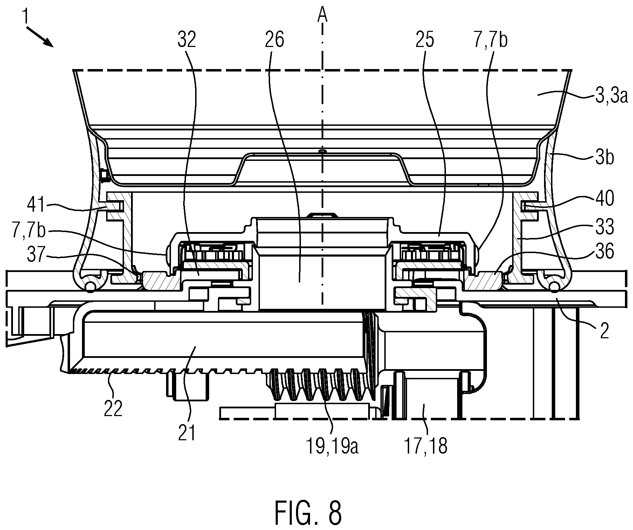

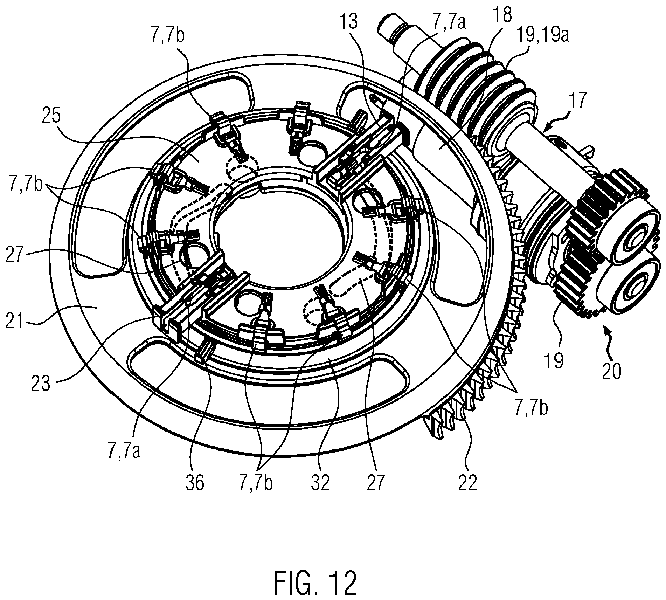

Bei den in den Fig. 3, 4, 7, 12 und 13 dargestellten Ausführungsbeispielen sind die Leistungskontakte 7a mit einer Antriebseinheit 17 bewegbar. Eine Antriebseinheit 17 ist beispielhaft in den Fig. 8 und 12 dargestellt. Die Antriebseinheit 17 wird von einer - nicht dargestellten - Steuereinheit der Küchengerätebasis 2 gesteuert, um die Leistungskontakte 7a zwischen der Ruheposition und der Kontaktposition zu bewegen bzw. insbesondere um das Zubereitungsmodul 3 mit der Küchengerätebasis, vorzugsweise gleichzeitig, zu verriegeln. Die Antriebseinheit 17 weist gemäß Fig. 12 einen Motor 18 sowie ein mehrere Zahnräder 19 umfassendes Getriebe 20 auf. Vorzugweise ist das Küchengerät 1 derart eingerichtet und ausgebildet, dass eine Kontaktierung durch Bewegung der Leistungskontakte 7a und eine Verriegelung automatisch nach dem Einbringen des Zubereitungsmoduls 3 in den Aufnahmebereich 4 der Küchengerätebasis 2 erfolgt.

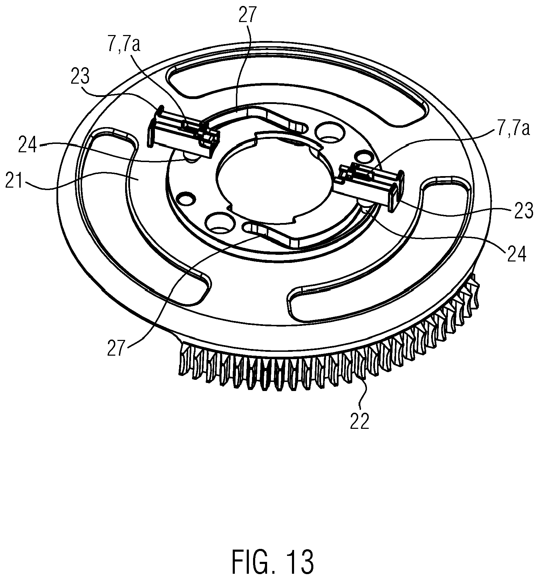

Die Antriebseinheit 17 steht in Wirkverbindung mit einem Antriebshebel 21, der beispielsweise in den Fig. 8, 12 und 13 dargestellt ist. Im Ausführungsbeispiel gemäß Fig. 8 weist der Antriebshebel 21 eine Kreissegmentform auf. In den Ausführungsbeispielen der Fig. 12 und 13 ist der Antriebshebel 21 ringförmig ausgebildet. Bei allen Ausführungsbeispielen der Fig. 8, 12 und 13 ist der Antriebshebel 21 von der Antriebseinheit 17 rotierbar, indem die Antriebseinheit 17 mit einem Schneckenrad 19a mit einer an dem Antriebshebel 21 ausgebildeten bogenförmigen Zahnleiste 22 zusammenwirkt - siehe insbesondere Fig. 8 und Fig. 12.

Fig. 12 zeigt ein Ausführungsbeispiel eines Antriebshebels 21 mit angeordneter Antriebseinheit 17 sowie einem Kontaktträgermodul 25, an dem die Leistungskontakte 7a und die Hilfskontakte 7b angeordnet sind. Die Leistungskontakte 7a und die Hilfskontakte 7b sind an einer Umfangsfläche 28 des Kontaktträgermoduls 25 angeordnet. Das Kontaktträgermodul 25 weist eine zentrale Ausnehmung 26 zum Durchtritt einer Antriebsschnittstelle, insbesondere einer Motorwelle, im Montagezustand an einer Küchengerätebasis 2 auf. Das Kontaktträgermodul 25 ist zumindest teilweise transparent dargestellt, um die Wirkmechanismen beschreiben zu können. Gemäß den Ausführungsbeispielen der Fig. 3, 4, 8, 9, 10 und 12 ist das Kontaktträgermodul 25 im Aufnahmebereich 4 der Küchengerätebasis 2 angeordnet.

Die in Fig. 12 dargestellten Leistungskontakte 7a stehen derart mit der Antriebseinheit 17 über den Antriebshebel 21 in Verbindung, dass diese von der Antriebseinheit 17 zwischen einer Ruheposition - siehe Fig. 3 - und einer Kontaktposition - siehe Fig. 4 und Fig. 12 - bewegbar sind. Gemäß Fig. 3 und 4 sind die Kontaktträger 23 derart in dem Kontaktträgermodul 25 geführt, dass diese an gegenüberliegenden Seiten aus der Umfangsfläche 28 aus dieser hervortreten, wenn sie sich in Richtung der in Fig. 4 dargestellten Kontaktposition bewegen.

Um die Leistungskontakte 7a vorteilhaft bewegen zu können, sind die Leistungskontakte 7a gemäß Fig. 12 in einem Kontaktträger 23 gehalten. Auch die Leistungskontakte 7a der Ausführungsbeispiele der Fig. 3, 4, 7 und 13 sind in jeweils einem Kontaktträger 23 angeordnet.

Fig. 5 zeigt ein Ausführungsbeispiel eines Kontaktträgers 23 in perspektivischer Ansicht. Der Kontaktträger 23 der Fig. 5 entspricht den in den Fig. 3, 4, 7 und 13 gezeigten Kontaktträgern 23. Der Kontaktträger 23 weist einen Antriebsvorsprung 24 auf, der stiftförmig ausgebildet ist. Der Kontaktträger 23 umgibt den Leistungskontakt 7a - siehe Fig. 6a - derart, dass der Leistungskontakt 7a in der Kontaktposition - auch bei nicht vorhandenem Zubereitungsmodul 3 - von einem Benutzer nicht unmittelbar berührt werden kann. Die vorhandenen Spalten sind kleiner als der Durchmesser eines durchschnittlichen Fingers ausgebildet.

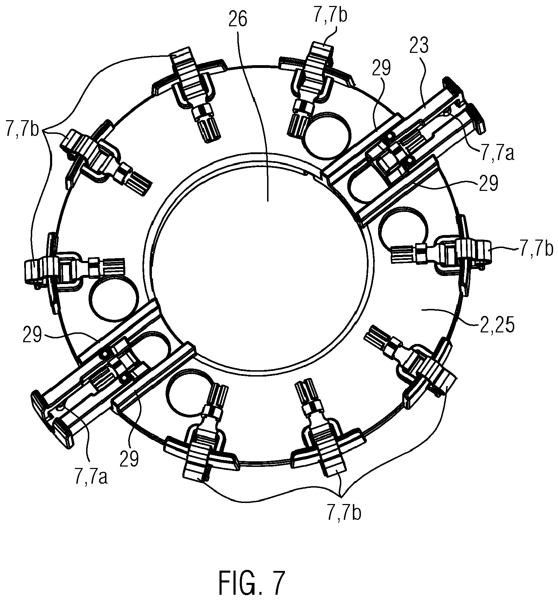

Im Montagezustand gemäß den Fig. 7 und 12 sind die Kontaktträger 23 beidseitig in Führungsschienen 29 am Kontaktträgermodul 25 derart geführt, dass die Kontaktträger 23 zusammen mit den Leistungskontakten 7a translatorisch zwischen einer Ruheposition und einer in den Fig. 7 und 12 dargestellten Kontaktposition bewegbar sind. Die Bewegung der Kontaktträger 23 erfolgt im Wesentlichen radial auf die zentrale Achse A gerichtet bzw. radial von der zentralen Achse A weg.

Die Bewegung der Kontaktträger 23 an dem Kontaktträgermodul 25 wird durch das Zusammenwirken des Antriebsvorsprungs 24 des jeweiligen Kontaktträgers 23 - siehe Fig. 5 - und jeweils einer Kulissenausnehmung 27 in dem Antriebshebel 21 - siehe Fig. 12 und Fig. 13 - bewirkt. Die Kulissenausnehmungen 27 sind derart geformt, dass sie den Antriebsvorsprung 24 des Kontaktträgers 23 derart führen, dass eine von der Antriebseinheit 17 bewirkte Rotation des Antriebshebels 21 in eine translatorische Bewegung der Kontaktträger 23 - gewandelt wird. Die Kontaktträger 23 sind dabei in den Führungsschienen 29 geführt - siehe Fig. 7 und Fig. 12. Die Drehrichtung des Antriebshebels 21 bestimmt dabei, ob die Kontaktträger 23 in Bezug auf das Kontaktträgermodul 25 nach außen - in die Kontaktposition - oder nach innen - in die Ruheposition - bewegt werden.

Fig. 7 zeigt ein Ausführungsbeispiel eines Kontaktträgermoduls 25 gemäß Fig. 3, 4 und 12 ohne obere Abdeckung. Die Hilfskontakte 7a sind innerhalb einer Gruppe von Hilfskontakten 7b mit einem Winkel von etwa 35° zueinander beanstandet. Zwischen den beiden Gruppen von Hilfskontakten 7b sind die Leistungskontakte 7a mit einem Winkel von etwa 180° zueinander beabstandet. Die Hilfskontakte 7b sind ortsfest. Die Leistungskontakte 7a sind mit den Kontaktträgern 23 in den Führungsschienen 29 bewegbar. Fig. 7 zeigt die Leistungskontakte 7a in der Kontaktposition.

In der in Fig. 3 dargestellten Ruheposition der Leistungskontakte 7a ist zwischen dem Kontaktträgermodul 25 und dem Kontaktträger 23 ein Spalt 30 ausgebildet. Der Spalt 30 ist insbesondere zwischen einem Kopfbereich 31 des Kontaktträgers 23 und dem Kontaktträgermodul 25, insbesondere dessen Umfangsfläche 28, ausgebildet. Der Spalt 30 ist mit einer möglichst geringen Toleranz bemessen, so dass keine oder nur sehr wenig Flüssigkeit, insbesondere unter Spritzschutzgesichtspunkten, in das Kontaktträgermodul 25 eindringen kann. Dadurch ist auch die Reinigung des Aufnahmebereichs 4 vereinfacht.

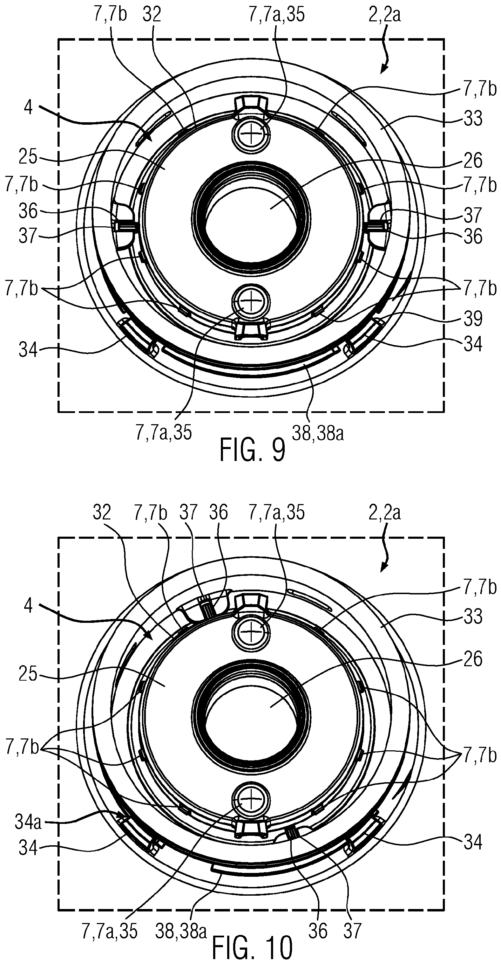

Die Ausführungsbeispiele der Fig. 2, 3, 4, 8, 9, 10 und 12 weisen ferner ein Verriegelungselement 32 auf. Das Verriegelungselement 32 ist derart an der Küchengerätebasis 2 angeordnet, dass es zwischen einer Oberseite 2a der Küchengerätebasis 2 und dem Kontaktträgermodul 25 rotierbar gehalten ist. Insbesondere ist das Verriegelungselement 32 mit dem Antriebshebel 21 gekoppelt, so dass das Verriegelungselement 32 mittels der Antriebseinheit 17 zwischen einer Freigabeposition und einer Verriegelungsposition bewegbar gehalten ist. Die Freigabeposition ist beispielsweise in Fig. 2, 3 und 9 gezeigt, während die Verriegelungsposition in Fig. 4 und Fig. 10 gezeigt ist. In der Freigabeposition ist ein Zubereitungsmodul 3 in mindestens zwei Ausrichtungen in dem Aufnahmebereich 4 anordenbar. In der Verriegelungsposition kann eine Inbetriebnahme der Küchengerätebasis 2 zusammen mit dem Zubereitungsmodul 3, nämlich des Küchengeräts 1, erfolgen.

Das Verriegelungselement 32 ist im Wesentlichen ringförmig ausgebildet. Das Verriegelungselement 32 weist mindestens zwei Mitnehmerkonturen 36 auf, die hier als Mitnehmerrippen ausgebildet sind. Bei in dem Aufnahmebereich 4 angeordnetem Zubereitungsmodul 3 wirken die Mitnehmerkonturen 36 formschlüssig mit beispielhaft in den Fig. 8, 9 und 10 dargestellten Mitnehmergegenkonturen 37 an einem Verriegelungsgegenelement 33 des Zubereitungsmoduls 3 zusammen. Die Mitnehmerkonturen 36 und Mitnehmergegenkonturen 37 sind derart angeordnet und ausgebildet, dass das Zubereitungsmodul 3 in mindestens zwei unterschiedlichen Ausrichtungen im Aufnahmebereich 4 anordenbar ist.

Fig. 9 und Fig. 10 zeigen ein Ausführungsbeispiel eines Aufnahmebereichs 4 einer Küchengerätebasis 2 gemäß Fig. 2 in perspektivischer Detailansicht. Das Verriegelungsgegenelement 33 eines Zubereitungsmoduls 3 ist zur Veranschaulichung der mechanischen Verriegelung separat dargestellt. Die Mitnehmerkonturen 36 greifen formschlüssig in Mitnehmergegenkonturen 37 ein. Durch den Formschluss wird eine von der Antriebseinheit 17 bewirkte Bewegung des Verriegelungselements 32 auf das Verriegelungsgegenelement 33 übertragen, so dass auch das Verriegelungsgegenelement 33 von einer Freigabeposition - siehe Fig. 9 - in eine Verriegelungsposition - siehe Fig. 10 - bewegt wird.

Das Verriegelungsgegenelement 33 ist als Verriegelungsgegenring ausgebildet, weist einen umlaufenden Verriegelungsabschnitt 38 auf, der von Ausnehmungen 39 unterbrochen ist. In der Freigabeposition gemäß Fig. 9 dienen die Ausnehmungen 39 dazu, dass an der Oberseite 2a der Küchengerätebasis 2 vorgesehene Verriegelungskonturen 34 die Verriegelungsabschnitte 38 hintergreifen können, um in der in Fig. 10 dargestellten Verriegelungsposition formschlüssig mit den Verriegelungsabschnitten 38 zusammenzuwirken und so das Zubereitungsmodul 3 mechanisch mit der Küchengerätebasis 2 zu verriegeln. Derartige Verriegelungskonturen 34 sind beispielsweise auch bei den Ausführungsbeispielen der Fig. 2, Fig. 3 und Fig. 4 vorgesehen.

Gemäß Fig. 9 und Fig. 10 weisen die Verriegelungsabschnitte 38 jeweils eine Verriegelungsfläche 38a auf, die im Verriegelungszustand gemäß Fig. 10 mit einer Verriegelungsgegenfläche 34a formschlüssig zusammenwirkt bzw. an dieser anliegt. Die Verriegelungskonturen 34 sind im Wesentlichen hakenförmig ausgebildet. Auf der Oberseite der Küchengerätebasis 2 sind mindestens vier Verriegelungskonturen 34 vorgesehen. Die Verriegelungskonturen 34 sind optional. Es liegt ebenfalls im Rahmen der vorliegenden Erfindung, dass die mechanische Verriegelung mit anderen Mitteln erfolgt, insbesondere mit anderen Mitteln als den Verriegelungskonturen 34. Beispielsweise ist vorgesehen, dass das Verriegelungselement 32 unmittelbar formschlüssig mit einem Zubereitungsmodul 3 zusammenwirkt, um das Zubereitungsmodul 3 mit der Küchengerätebasis 2 zu verriegeln.

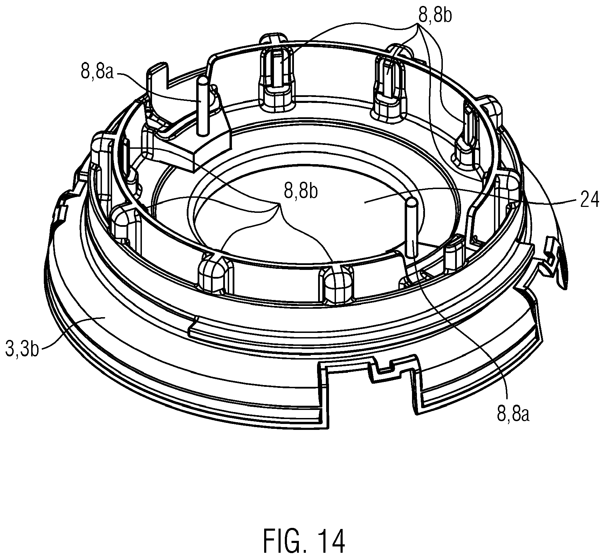

Fig. 8 zeigt einen teilweisen Schnitt durch ein Küchengerät 1 mit Zubereitungsmodul 3 und Küchengerätebasis 2. Das Zubereitungsmodul 3 ist in dem Aufnahmebereich 4 angeordnet. Das Zubereitungsmodul 3 ist hier als Zubereitungsgefäß mit Zubereitungsinnenraum 3a und Fußabschnitt 3b ausgebildet. Zur Veranschaulichung sind nur die Mittel zur mechanischen Verriegelung des Zubereitungsmoduls 3 mit der Küchengerätebasis 2 dargestellt. Für die elektrische Kontaktierung ist ferner die Anordnung einer elektrischen Gegenschnittstelle 8, insbesondere ähnlich der in Fig. 11 oder Fig. 14 dargestellten, erforderlich. Das Verriegelungsgegenelement 33, gemäß Fig. 8 ebenfalls in Form eines Verriegelungsgegenrings, weist eine umlaufende Nut 40 auf, die mit einem zugehörigen Steg 41 in einem Fußabschnitt 3b des Zubereitungsmoduls 3 derart zusammenwirkt, dass das Verriegelungsgegenelement 33 am Zubereitungsmodul 3 rotierbar ist.

Wie bereits zu Fig. 9 und Fig. 10 beschrieben, wird die Rotation des Verriegelungsgegenelements 33 zwischen einer Freigabeposition und einer Verriegelungsposition durch das Zusammenwirken der Mitnehmerkonturen 36 des Verriegelungselementes 32 mit den Mitnehmergegenkonturen 37 am Verriegelungsgegenelement 33 bewirkt. Die Rotation des Verriegelungselementes 32 wird wiederum durch eine Übertragung eines Drehmoments von dem Antriebshebel 21 bewirkt, der wiederum von der Antriebseinheit 17 bewegt wird. Der Antriebshebel 21 ist hier kreissegmentförmig ausgebildet und formschlüssig mit dem Verriegelungselement 32 verbunden.

Dieser Aufbau hat gegenüber dem Stand der Technik den Vorteil, dass mit einer extrem flachen Bauweise eine zuverlässige und automatische Kontaktierung und Verriegelung des Zubereitungsmoduls 3 mit der Küchengerätebasis 2 erfolgen kann. Die zentrale Ausnehmung 26 kann von einer mechanischen Antriebsschnittstelle durchtreten werden.

Fig. 11 zeigt ein Ausführungsbeispiel eines Teils eines Fußabschnitts 3b für ein Zubereitungsmodul 3. Der Fußabschnitt 3b weist eine elektrische Gegenschnittstelle 8 auf, die zwei Leistungsgegenkontakte 8a in Form von Kontaktmessern und acht Hilfsgegenkontakte 8b in Form von Kontaktflächen aufweist. Ein derartiger Fußabschnitt 3b kann beispielsweise mit einer Küchengerätebasis 2 gemäß Fig. 3 und Fig. 4 zusammenwirken. Der Fußabschnitt 3b ist an Zubereitungsmodulen 3 mit unterschiedlichen Funktionen anordenbar. Die Hilfsgegenkontakte 8b werden beim Anordnen in dem Aufnahmebereich 4 kontaktiert, die Leistungsgegenkontakte 8a erst dann, wenn die Kontaktträger 23 in der Kontaktposition sind (siehe Fig. 4, 7 und 12).

Fig. 14 zeigt ein Ausführungsbeispiel eines Teils eines Fußabschnitts 3b für ein Zubereitungsmodul 3. Der Fußabschnitt 3b weist eine elektrische Gegenschnittstelle 8 auf, die zwei Leistungsgegenkontakte 8a in Form von Kontaktstiften und acht Hilfsgegenkontakte 8b in Form von Kontaktflächen aufweist. Ein derartiger Fußabschnitt 3b kann beispielsweise mit einer Küchengerätebasis 2 gemäß Fig. 2 zusammenwirken. Der Fußabschnitt 3b ist an Zubereitungsmodulen 3 mit unterschiedlichen Funktionen anordenbar. Die Hilfsgegenkontakte 8b werden beim Anordnen in dem Aufnahmebereich 4 zeitlich vor den Leistungsgegenkontakten 8a kontaktiert.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Küchengerät
- 2: Küchengerätebasis
- 2a: Oberseite
- 3: Zubereitungsmodul
- 3a: Zubereitungsinnenraum
- 3b: Fußabschnitt
- 4: Aufnahmebereich
- 5: Bedien- und Anzeigeeinrichtung
- 6: Drück- und Drehknopf
- 7: Elektrische Schnittstelle
- 7a: Leistungskontakte
- 7b: Hilfskontakte
- 8: Elektrische Gegenschnittstelle
- 8a: Leistungsgegenkontakte
- 8b: Hilfsgegenkontakte
- 9: Kontaktbereich
- 10: Anschlussbereich
- 11: Kontaktarme
- 12: Kontaktfläche
- 13: Kontaktbereich
- 14: Anschlussbereich
- 15: Haltekontur
- 16: Kontaktfläche
- 17: Antriebseinheit
- 18: Motor
- 19: Zahnräder
- 19a: Schneckenrad
- 20: Getriebe
- 21: Antriebshebel
- 22: Zahnleiste
- 23: Kontaktträger
- 24: Antriebsvorsprung
- 25: Kontaktträgermodul
- 26: Zentrale Ausnehmung
- 27: Kulissenausnehmungen
- 28: Umfangsfläche
- 29: Führungsschienen
- 30: Spalt
- 31: Kopfbereich
- 32: Verriegelungselement
- 33: Verriegelungsgegenelement
- 34: Verriegelungskonturen der Küchengerätebasis 2
- 34a: Verriegelungsgegenfläche
- 35: Dichtkappe
- 36: Mitnehmerkontur
- 37: Mitnehmergegenkontur
- 38: Verriegelungsabschnitt
- 38a: Verriegelungsfläche
- 39: Ausnehmung
- 40: Nut
- 41: Steg

## Patentansprüche

1. Küchengerät (1), mit mindestens einer Küchengerätebasis (2) und mindestens einem Zubereitungsmodul (3), wobei die Küchengerätebasis (2) mindestens eine elektrische Schnittstelle (7) und mindestens einen Aufnahmebereich (4) aufweist, wobei das Zubereitungsmodul (3) mindestens eine elektrische Gegenschnittstelle (8) zur elektrischen Kontaktierung mit der elektrischen Schnittstelle (7) aufweist, wobei die elektrische Schnittstelle (7) mindestens zwei Leistungskontakte (7a) und mindestens einen Hilfskontakt (7b) aufweist, und wobei die elektrischen Gegenschnittstelle (8) mindestens zwei Leistungsgegenkontakte (8a) und mindestens einen Hilfsgegenkontakt (8b) aufweist,
**dadurch gekennzeichnet, dass**
die Leistungskontakte (7a) und die Leistungsgegenkontakte (8a) sowie der Hilfskontakt (7b) und der Hilfsgegenkontakt (8b) derart ausgebildet und eingerichtet sind, dass die Leistungskontakte (7a) mit den Leistungsgegenkontakten (8a) zu einem unterschiedlichen Zeitpunkt elektrisch kontaktiert werden als der Hilfskontakt (7b) mit dem Hilfsgegenkontakt (8b).

2. Küchengerät (1) nach Anspruch 1,
**dadurch gekennzeichnet, dass**
die Leistungskontakte (7a) und/oder der Hilfskontakt (7b) und/oder die Leistungsgegenkontakte (8a) und/oder der Hilfsgegenkontakt (8b) auf einer gedachten, gemeinsamen Kreisbahn zueinander an unterschiedlichen Winkelpositionen angeordnet sind oder dass die Leistungskontakte (7a) und/oder der Hilfskontakt (7b) und/oder die Leistungsgegenkontakte (8a) und/oder der Hilfsgegenkontakt (8b) auf gedachten, unterschiedlichen Kreisbahnen mit unterschiedlichen Radien jeweils auf unterschiedlichen Winkelpositionen angeordnet sind.

3. Küchengerät (1) nach Anspruch 1 oder 2,
**dadurch gekennzeichnet, dass**
mindestens einer der Leistungskontakte (7a) und/oder zumindest der Hilfskontakt (7b) der elektrischen Schnittstelle (7), insbesondere während und/oder nach dem Anordnen des Zubereitungsmoduls (3) in dem Aufnahmebereich (4), aus einer Ruheposition zumindest in Richtung einer Kontaktposition an der Küchengerätebasis (2) bewegbar ist und/oder dass mindestens einer der Leistungsgegenkontakte (8a) und/oder zumindest der Hilfsgegenkontakt (8b) der elektrischen Gegenschnittstelle (8), insbesondere während und/oder nach dem Anordnen des Zubereitungsmoduls (3) in dem Aufnahmebereich (4), aus einer Ruheposition zumindest in Richtung einer Kontaktposition an dem Zubereitungsmodul (3) bewegbar ist.

4. Küchengerät (1) nach einem der Ansprüche 1 bis 3,
**dadurch gekennzeichnet, dass**
die Leistungskontakte (7a), die Leistungsgegenkontakte (8a), der Hilfskontakt (7b) und der Hilfsgegenkontakt (8b) aus einem elektrisch leitenden Material hergestellt sind, und dass mindestens eine Kontaktfläche (16) der Leistungskontakte (7a), der Leistungsgegenkontakte (8a), des Hilfskontakts (7b) und/oder des Hilfsgegenkontakts (8b) zur Reduzierung des Übergangswiderstands zumindest teilweise mit einer Beschichtung versehen sind, insbesondere mit einer Beschichtung aus einer Legierung, die zumindest Gold und/oder Silber enthält.

5. Küchengerät (1) nach einem der Ansprüche 1 bis 4,
**dadurch gekennzeichnet, dass**
die Leistungskontakte (7a), der Hilfskontakt (7b), die Leistungsgegenkontakte (8a) und/oder der Hilfsgegenkontakt (8b) zumindest mittelbar mittels einer Antriebseinheit (17) bewegbar ist/sind, vorzugsweise dass die Antriebseinheit (17) mindestens einen Motor (18) und mindestens ein Zahnrad (19), insbesondere mindestens ein Stirn-, Kegel- und/oder Schneckenrad (19a), aufweist oder mindestens ein Getriebe (20) aufweist.

6. Küchengerät (1) nach Anspruch 5,
**dadurch gekennzeichnet, dass**
die Küchengerätebasis (2) mindestens einen Antriebshebel (21) aufweist, dass der Antriebshebel (21) zumindest mittelbar, insbesondere unmittelbar, von der Antriebseinheit (17) bewegbar, insbesondere rotierbar, ist, und dass mindestens einer der Leistungskontakte (7a), zumindest der Hilfskontakt (7b), mindestens einer der Leistungsgegenkontakte (8a) und/oder zumindest der Hilfsgegenkontakt (8b) derart mit dem Antriebshebel (21) zusammenwirkt/zusammenwirken, dass eine Bewegung des Antriebshebels (21) eine Bewegung mindestens eines der Leistungskontakte (7a), zumindest des Hilfskontakts (7b), mindestens eines der Leistungsgegenkontakte (8a) und/oder zumindest des Hilfsgegenkontakts (8b) aus der Ruheposition in die Kontaktposition bewirkt.

7. Küchengerät (1) nach einem der Ansprüche 3 bis 7,
**dadurch gekennzeichnet, dass**
mindestens einer der Leistungskontakte (7a), zumindest der Hilfskontakt (7b), mindestens einer der Leistungsgegenkontakte (8a) und/oder zumindest der Hilfsgegenkontakt (8b) an mindestens einem Kontaktträger (23) angeordnet ist/sind, und dass der Kontaktträger (23) zusammen mit dem mindestens einen Leistungskontakt (7a), zumindest dem Hilfskontakt (7b), dem mindestens einen Leistungsgegenkontakt (8a) und/oder zumindest dem Hilfsgegenkontakt (8b) bewegbar gehalten ist, vorzugsweise dass der Kontaktträger (23) aus einem schwer entflammbaren Kunststoff ausgebildet ist.

8. Küchengerät (1) nach Anspruch 6 oder 7,
**dadurch gekennzeichnet, dass**
der Antriebshebel (21) mindestens eine Kulissenausnehmung (27) zum Zusammenwirken mit mindestens einem Antriebsvorsprung (24) des Kontaktträgers (23) aufweist, insbesondere dass die Kulissenausnehmung (27) derart geformt ist, dass eine Rotation des Antriebshebels (21) eine translatorische Bewegung des Kontaktträgers (23) bewirkt.

9. Küchengerät (1) nach einem der Ansprüche 3 bis 8,
**dadurch gekennzeichnet, dass**
die Küchengerätebasis (2) mindestens ein Kontaktträgermodul (25) aufweist, dass die Leistungskontakte (7a) und/oder der Hilfskontakt (7b), insbesondere der Kontaktträger (23), in der Ruheposition in das Kontaktträgermodul (25) eingefahren sind/ist, und dass die Leistungskontakte (7a) und/oder der Hilfskontakt (7b), insbesondere der Kontaktträger (23), in der Kontaktposition zumindest teilweise aus dem Kontaktträgermodul (25) hervorstehen.

10. Küchengerät (1) nach Anspruch 9,
**dadurch gekennzeichnet, dass**
an einer Umfangsfläche (28) des Kontaktträgermoduls (25) in der Ruheposition ein Spalt (30) zwischen dem Kontaktträger (23), insbesondere einem Kopfbereich (31) des Kontaktträgers (23), und dem Kontaktträgermodul (25) derart ausgebildet ist, dass das Risiko eines Flüssigkeitseintritts minimiert ist, vorzugsweise indem mindestens ein Dichtmittel zwischen Kontaktträger (23) und Kontaktträgermodul (23) angeordnet ist.

11. Küchengerät (1) nach einem der Ansprüche 1 bis 10,
**dadurch gekennzeichnet, dass**
die Küchengerätebasis (2) mindestens ein Verriegelungselement (32) aufweist, dass das Verriegelungselement (32) zumindest zwischen einer Freigabeposition und einer Verriegelungsposition bewegbar gehalten ist, dass in der Freigabeposition das Zubereitungsmodul (3) in mindestens zwei Ausrichtungen in dem Aufnahmebereich (4) anordenbar ist, und dass in der Verriegelungsposition eine Verriegelung des Zubereitungsmoduls (3) mit der Küchengerätebasis (2) bewirkt wird, insbesondere dass sich zumindest die Leistungskontakte (7a) in der Verriegelungsposition des Verriegelungselements (32) in der Kontaktposition befinden und in der Freigabeposition des Verriegelungselements (32) in der Ruheposition, vorzugsweise dass das Verriegelungselement (32) von dem Antriebshebel (21) bewegbar ist.

12. Küchengerät (1) nach Anspruch 11,
**dadurch gekennzeichnet, dass**
das Verriegelungselement (32) bei dem in dem Aufnahmebereich (4) angeordneten Zubereitungsmodul (3) formschlüssig mit mindestens einem Verriegelungsgegenelement (33) des Zubereitungsmoduls (3) zusammenwirkt, so dass eine Bewegung, insbesondere Rotation, des Verriegelungselements (32) eine Bewegung, insbesondere Rotation, des Verriegelungsgegenelements (33) bewirkt, dass das Verriegelungsgegenelement (33) durch das Verriegelungselement (32) zwischen einer Freigabeposition und einer Verriegelungsposition bewegbar ist, und dass das Verriegelungsgegenelement (33) in der Verriegelungsposition mit Verriegelungskonturen (34) an der Küchengerätebasis (2) formschlüssig zusammenwirkt, wodurch eine Verriegelung des Zubereitungsmoduls (3) mit der Küchengerätebasis (2) erfolgt.

13. Küchengerät (1) nach einem der Ansprüche 6 bis 12,
**dadurch gekennzeichnet, dass**
das der Antriebshebel (21), insbesondere auch das Verriegelungselement (32), zumindest mittelbar durch eine Antriebseinheit (17) bewegbar, insbesondere rotierbar, angetrieben ist, und dass die Antriebseinheit (17) außerhalb eines Drehpunkts des Verriegelungselements (32) angeordnet ist.

14. Küchengerätebasis (2), für ein Küchengerät (1), insbesondere nach einem der Ansprüche 1 bis 13, aufweisend mindestens eine elektrische Schnittstelle (7) und mindestens einen Aufnahmebereich (4), wobei die elektrische Schnittstelle (7) mindestens zwei Leistungskontakte (7a) und mindestens einen Hilfskontakt (7b) aufweist, wobei mindestens einer der Leistungskontakte (7a) und/oder zumindest der Hilfskontakt (7b) der elektrischen Schnittstelle (7), insbesondere während und/oder nach dem Anordnen eines Zubereitungsmoduls (3) in dem Aufnahmebereich (4), aus einer Ruheposition zumindest in Richtung einer Kontaktposition an der Küchengerätebasis (2) bewegbar ist.

15. Zubereitungsmodul (3) für ein Küchengerät (1), insbesondere nach einem der Ansprüche 1 bis 13, aufweisend mindestens eine elektrische Gegenschnittstelle (8) zur elektrischen Kontaktierung mit der elektrischen Schnittstelle (7) einer Küchengerätebasis (2), wobei die elektrische Gegenschnittstelle (8) mindestens zwei Leistungsgegenkontakte (8a) und mindestens einen Hilfsgegenkontakt (8b) aufweist, wobei mindestens einer der Leistungsgegenkontakte (8a) und/oder zumindest der Hilfsgegenkontakt (8b) der elektrischen Gegenschnittstelle (8), insbesondere während und/oder nach dem Anordnen des Zubereitungsmoduls (3) in dem Aufnahmebereich (4), aus einer Ruheposition zumindest in Richtung einer Kontaktposition an dem Zubereitungsmodul (3) bewegbar ist.
